# EUROPEAN PATENT SPECIFICATION

(11) **EP 3 747 320 B1**
(45) Date of publication and mention of the grant of the patent: **02.07.2025**
(21) Application number: 20174466.1
(22) Date of filing: 13.05.2020
(51) Int. Cl.: A47J 31/00, A47J 31/44, C12C 13/10

(54) **BEVERAGE MAKER**
GETRÄNKEZUBEREITER
PRÉPARATEUR DE BOISSONS

(30) Priority: 17.05.2019 KR 20190058389
(43) Date of publication of application: 09.12.2020
(73) Proprietor: LG Electronics Inc., SEOUL, 07336 (KR)
(72) Inventor: LEE, Daewoong, 08592 Seoul (KR); MOON, Jungmin, 08592 Seoul (KR); YOON, Shic, 08592 Seoul (KR)
(74) Representative: Ter Meer Steinmeister & Partner

(56) References cited:
- US-A1- 2007 289 913
- US-A1- 2017 320 721
- US-A1- 2017 335 257

## Description

### BACKGROUND

The present disclosure relates a beverage maker, and more particularly, to a beverage maker for making a fermentation beverage.

Beverages are collectively referred to as drinkable liquids such as alcohol or tea. For example, beverages may be divided into various categories such as water (a beverage) to solve thirst, juice beverages with unique flavor and taste, refreshing beverages giving refreshing sensation, favorite beverages with an arousal effect, or alcoholic beverages with an alcohol effect.

Representative examples of such a beverage is beer. The beer is an alcoholic beverage made by making juice of malt sprouting from barley, filtering the juice, adding hop, and fermenting the juice by using the yeast.

Consumers may purchase ready-made products made and sold by a beer maker or home beer (or handmade beer) made by directly fermenting beer ingredients at home or in a bar.

House beer may be made in a variety of types rather ready-made products and may be made to suit the consumer's taste.

The ingredients for making beer may include water, malt, hops, fermentation accelerators, flavoring additives, and the like.

The fermentation accelerators, which are called yeast, may be added to malt to ferment the malt and help to produce alcohol and carbonic acid.

The flavor additives are additives that enhance the taste of beer, such as fruit, syrup, vanilla beans, and the like.

Generally, the house beer may include three stages, namely, a wort production step, a fermentation step, and an aging step, and it may take about two to three weeks from the wort production step to the aging step.

It is important for the house beer to maintain an optimum temperature during the fermentation stage, and the more the beer is more simply made, the more user's convenience is improved.

In recent years, a beverage maker capable of easily making house beer in a home or a bar has been gradually used, and it is preferable that such a beverage maker safely and easily makes beer.

US 2007/289913 A1 relates to a filter cartridge, especially a suction filter cartridge, which is provided, in the outlet opening, with an inward-pointing, peripheral snap-on rim which can be folded from a first lower snap position into a second upper snap position and vice versa. US 2007/289913 A1 also relates to a seat element for such a filter cartridge, comprising a connection sleeve which engages with the outlet opening of the filter cartridge. Said connecting sleeve comprises at least one actuator which displaces, when the filter cartridge is placed on the rim, the snap-on rim from a first lower snap position to the second upper snap-on rim from a first lower snap position to the second upper snap positioning which the snap-on rim rests against the connecting sleeve in a sealing and clamping manner.

US 2017/335257 A1 presents a beverage-making apparatus that includes a fermentation tank assembly including a fermentation tank having an opening formed therein and a fermentation tank cover configured to open and close the opening. The beverage-making apparatus also includes a refrigeration cycle apparatus including a compressor, a condenser, an expansion device, and an evaporator. The refrigeration cycle apparatus is configured to circulate a refrigerant therethrough and to control a temperature of the fermentation tank as the evaporator is disposed at the fermentation tank. The beverage-making apparatus further includes a heat insulating wall surrounding both the fermentation tank and the evaporator.

US 2017/320721 A1 presents a water purifier that includes: a main body including: a filter unit, a cooling unit, and a heating unit.

### SUMMARY

Embodiments provide a beverage maker in which a water tank is easily mounted in place within a water tank case.

Embodiments also provide a beverage maker having a reliably sealed water tank.

The object is solved by invention set out by the features of the independent claim. Preferred embodiments are given the dependent claims.

In a beverage maker according to the invention, a lower rib is disposed on a bottom surface of a water tank, and a guide rib disposed outside the lower rib is disposed on a bottom surface of the water tank case so that an upper end of the guide rib gradually decreases in height toward the inside. Thus, the lower end of the lower rib may be slid along the upper end of the guide rib, and the lower rib may be guided to the inside of the guide rib. Therefore, the water tank may be mounted in place on the water tank case.

In the invention, a beverage maker includes: a water tank in which water is stored; a water tank case in which the water tank is separably accommodated.

The water tank has a lower rib protruding downward from a bottom surface of the water tank.

A guide rib protrudes upward from an inner bottom surface of the water tank case.

The guide rib of the water tank case is disposed outside the lower rib.

An upper end of the guide rib may be inclined in a direction in which the guide rib decreases in height toward the inside thereof.

A protrusion piece protrudes upward from the inner bottom surface of the water tank case.

The protrusion piece may be disposed at an inner side of the guide rib and is spaced apart from the guide rib.

A hook groove with which the protrusion piece is hooked is defined in the lower rib.

Both ends of the hook groove are inclined in a direction closer to each other toward an upper side.

The beverage maker may further include: a water discharge hole defined in the bottom surface of the water tank; a hollow portion protruding downward from the bottom surface of the water tank and disposed inside the lower rib, the hollow portion communicating with the water discharge hole; an insertion portion which is provided in the inner bottom surface of the water tank case and into which the hollow portion is inserted; and a water tank water discharge channel communicating with the inside of the insertion portion to discharge water within the water tank.

The beverage maker may further include: a water leakage prevention valve mounted inside the hollow portion; an elastic member configured to press the water leakage prevention valve downward so as to allow the water leakage prevention valve to block the water discharge hole; and a pressing protrusion disposed within the insertion portion, the pressing protrusion being configured to press the water leakage prevention valve upward so as to allow the water leakage prevention valve to open the water discharge hole.

The beverage maker may further include a valve guide rib connected to an upper end of the water discharge hole.

The valve guide rib may be configured to guide elevation of the water leakage prevention valve.

The water tank may include an inclined portion configured to connect an outer circumference of the water tank to the lower rib and having a diameter that decreases downward.

The guide rib may be disposed below the inclined portion.

The water tank may include: a rounded curved portion configured to define a portion of an outer circumference of the water tank; and a flat portion configured to define the other portion of the outer circumference of the water tank.

A mounting guide on the water tank case may contact or face the flat portion.

In a beverage maker according to an embodiment, a packing may be disposed between a main body of a water tank and a lid seating body fused with the main body. Thus, water may be prevented from leaking through a gap between the main body and the lid seating body.

The beverage maker may further include a water tank lid configured to open and close the water tank at an upper side of the water tank.

The water tank may include: a main body having an opened top surface; a lid seating body which is fused or located on an upper end of the main body and on which the water tank lid is seated.

Preferably, a packing disposed between the main body and the lid seating body.

The water tank may further include a handle rotatably connected to the lid seating body and disposed to surround a portion of an outer circumference of the water tank lid.

The water tank lid may include a connection portion that is hinge-coupled to the lid seating body, and the connection portion may be disposed inside the handle.

A spaced space may be defined between the connection portion and the handle.

The lid seating body may be provided with: a first upper rib protruding downward from the lid seating body; and a second upper rib radially spaced outward from the first upper rib.

The packing may be fitted between the first upper rib and the second upper rib.

The main body may include: a first lower rib contacting a lower end of the first upper rib; and a second lower rib radially spaced outward from the first lower rib.

The lid seating body may be provided with a fusion portion protruding downward from an inner end of the second upper rib and fused with the second lower rib.

An upper protrusion may protrude downward from the second upper rib, a lower protrusion may protrude upward from the second lower rib to contact the upper protrusion, and the upper protrusion and the lower protrusion may cover the fusion portion at the outside.

The beverage maker may be a beer maker or home or house beer maker.

The details of one or more embodiments are set forth in the accompanying drawings and the description below. Other features will be apparent from the description and drawings, and from the claims.

### BRIEF DESCRIPTION OF THE DRAWINGS

Fig. 1 is a view illustrating a configuration of a beverage maker according to an embodiment.
Fig. 2 is a perspective view of the beverage maker according to an embodiment.
Fig. 3 is a perspective view illustrating a state in which each cover, a residual water tray, and an ingredient supplier are removed in the beverage maker of Fig. 2.
Fig. 4 is perspective view illustrating a state in which a water tank case is removed in the beverage maker of Fig. 3.
Fig. 5 is a rear perspective view illustrating the beverage maker of Fig. 3.
Fig. 6 is a plan view showing a state when a main frame is removed in the beverage maker of Fig.4.
Fig. 7 is a rear view of a rear cover according to an embodiment.
Fig. 8 is a perspective view illustrating the rear cover of Fig. 7.
Fig. 9 is a perspective view of a base according to an embodiment.
Fig. 10 is a bottom view illustrating the base of Fig. 9.
Fig. 11 is a perspective view of a water tank and a water tank lid according to an embodiment.
Fig. 12 is a view illustrating a state in which the water tank lid is opened acc. to an embodiment.
Fig. 13 is a view illustrating a state in which a water tank handle rotates upward according to an embodiment.
Fig. 14 is a cross-sectional view illustrating a main body of the water tank, taken in a horizontal direction according to an embodiment.
Fig. 15 is a cross-sectional view illustrating the inside of the water tank and the water tank case according to an embodiment.
Fig. 16 is a view illustrating a bottom surface of the water tank according to an embodiment.
Fig. 17 is a view illustrating the inside of the water tank case when viewed from an upper side according to an embodiment.
Fig. 18 is a view for explaining an operation of a water leakage prevention valve according to an embodiment.
Fig. 19 is a view illustrating a state in which the water leakage prevention valve is opened according to an embodiment.
Fig. 20 is a view for explaining a coupling relationship between a water tank body and a lid seating body according to an embodiment.

### DETAILED DESCRIPTION OF THE EMBODIMENTS

Hereinafter, detailed embodiments will be described in detail with reference to the accompanying drawings.

Although beer is exemplified as a beverage made by using a beverage maker in this specification, a kind of beverages is not limited to the beer that is capable of being made by using the beverage maker. For example, various kinds of beverages may be made through the beverage maker according to embodiments.

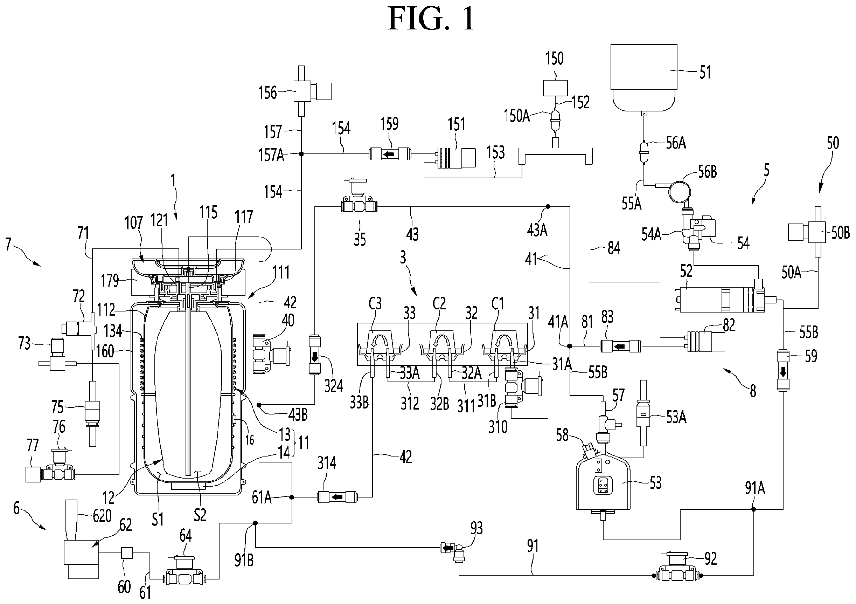

Fig. 1 is a view illustrating a configuration of a beverage maker according to an embodiment.

A beverage maker includes a fermentation module 1. A beverage may be fermented in the fermentation module 1.

The beverage maker may include a temperature controller that controls an inner temperature of the fermentation module 1.

The beverage maker includes a water supply module 5. The water supply module 5 may supply water.

The beverage maker may include ingredient supplier 3 provided with ingredient accommodation portions 31, 32, and 33 in which ingredients required for making the beverage are accommodated.

The beverage maker may include main channels 41 and 42 connecting the water supply module 5 to the fermentation module 1.

The beverage maker may include a beverage dispenser 6 for dispensing the beverage made in the fermentation module 1 to the outside.

The beverage dispenser 6 may be connected to a second main channel 42. Thus, the beverage dispensed from the fermentation module 1 may be guided to the beverage dispenser 6 by passing through a portion of the second main channel 42.

The beverage maker may further include a gas discharger 7. The gas discharger 7 may be connected to the fermentation module 1 to discharge a gas generated while the beverage is made.

The beverage maker may further include an air injector for injecting air. The air injector 8 may be connected to the water supply module 5 or a first main channel 41. The air injector 8 may include an air injection pump 82.

The beverage maker may further include an air controller 15 controlling a pressure between an inner wall of a fermenter 112 and an outer surface of a fermentation container 12.

The beverage maker may further include a sub channel 91. The sub channel 91 may connect the water supply module 5 to the beverage dispenser 6.

The beverage maker may further include an air removal module 50 that removes air within the water supply pump 52 of the water supply module 5.

Hereinafter, the fermentation module 1 will be described in detail.

The fermentation module 1 may include a fermenter module 111 having an opening 170 and fermentation lid 107 that opens and closes the opening 170.

The fermenter module 111 may include a fermentation case 160 and a fermenter 112 accommodated in the fermentation case 160 and having an inner space S1. The insulation portion (not shown) may be provided between the fermentation case 160 and the fermenter 112. The fermenter module 111 may further include a lid seating body 179 on which the fermentation lid 107 is seated.

Each of the fermentation case 160 and the fermenter 112 may be provided as an assembly of a plurality of members. The fermentation case 160 may define an outer appearance of the fermenter module 111.

The fermentation lid 107 may seal the inside of the fermenter module 111 and be disposed on the fermenter module 111 to cover the opening. A main channel, particularly, a main channel connection portion 115 connected to a second main channel 42 may be provided in the fermentation lid 107.

A fermentation container 12 may be accommodated in the fermenter 112.

The fermentation container 12 may be provided as a separate container so that the beverage ingredients and the made beverage stain an inner wall of the fermenter 112. The fermentation container 12 may be separably disposed on the fermenter 112. The fermentation container 12 may be seated on the fermenter 112 to ferment the beverage within the fermenter 112. After the fermentation container 12 is used, the fermentation container 12 may be withdrawn to the outside of the fermenter 112.

The fermentation container 12 may be a pack containing the ingredients for making the beverage. The fermentation container 12 may be made of a flexible material. Thus, the fermentation container 12 may be easily inserted into the fermenter 112 and be contracted and expanded by a pressure. However, this embodiment is not limited thereto. For example, the fermentation container 12 may be made of a pet material.

The fermentation container 12 may have a beverage making space S2 in which the beverage ingredients are accommodated, and the beverage is made. The fermentation container 12 may have a size less than that of the inner space S1 of the fermenter 112.

The fermentation container 12 may be inserted and accommodated into the fermenter 112 in the state in which the ingredients are contained in the fermentation container 12. The fermentation container 12 may be inserted into the fermenter 112 and then accommodated in the fermenter 112 in the state in which the fermentation lid 107 is opened.

The fermentation lid 107 may seal the fermenter 112 after the fermentation container 12 is inserted into the fermenter 112. The fermentation container 12 may assist the fermentation of the ingredient in the state in which the fermentation container 12 is accommodated in the space S1 that is sealed by the fermentation container 112 and the fermentation lid 107. The fermentation container 12 may be expanded by the pressure therein during the making of the beverage. When air is supplied between an inner surface of the fermenter 112 and an outer surface of the fermentation container 12, the fermentation container 12 may be compressed by an inner pressure of the fermenter 112, and the beverage contained in the fermentation container 12 may be taken out.

The fermenter 112 may be disposed in the fermentation case 160. The fermenter 112 may have an outer circumference surface and a bottom surface, which are spaced apart from the inner surface of the fermentation case 160. In more detail, the outer circumference the fermenter 112 may be spaced apart from an inner circumference of the fermentation case 160, and an outer bottom surface of the fermenter 112 may be spaced apart from an inner bottom surface of the fermentation case 160.

The insulation portion (not shown) may be provided between the fermentation case 160 and the fermenter 112. The insulation portion may be disposed in the fermentation case 160 to surround the fermenter 112. Thus, the fermenter 112 may be constantly maintained in temperature.

The insulation portion may be made of a material such as foamed polystyrene or polyurethane which has high thermal insulating performance and absorbs vibration.

The fermenter 112 may include a temperature sensor 16 for measuring the temperature of the inner fermenter 112.

The temperature sensor 16 may be mounted on a circumferential surface of the fermenter 112. The temperature sensor 16 may be disposed below an evaporator 134 wound around the fermenter 112.

Hereinafter, the temperature controller 11 will be described in detail.

The temperature controller 11 may change a temperature of the fermenter 112. The temperature controller 11 may heat or cool the fermenter 112 to control a temperature of the fermenter 112 at an optimal temperature for fermenting the beverage.

The temperature controller 11 may include at least one of a refrigeration cycle device 13 and a heater 14. However, this embodiment is not limited thereto. For example, the temperature controller 11 may include a thermoelement TEM.

The refrigeration cycle device 13 may control the fermenter 112 to control a temperature of the fermenter 112. The refrigeration cycle device 13 may include a compressor, a condenser, an expansion mechanism, and an evaporator 134.

The evaporator 134 may be disposed to contact an outer surface of the fermenter 112. The evaporator 134 may be provided as an evaporation tube wound around an outer surface of the fermenter 112. The evaporator 134 may be accommodated between the fermenter 112 and the insulation portion to cool the fermenter 112 that is insulated by the insulation portion.

The temperature controller 11 may further include a heater 14 heating the fermenter 112. The heater 14 may be installed to contact the bottom surface of the fermenter 112. The heater 14 may be provided as a heat generation heater that generates heat when power is applied. The heater 14 may be provided as a plate heater.

Thus, the natural convection of a fluid may be generated inside the fermenter 112 by the evaporator 134 and the heater 14, and temperature distribution inside the fermenter 112 and the fermentation container 12 may be uniform.

Hereinafter, the main channels 41 and 42 and a bypass channel 43 will be described.

The main channels 41 and 42 may include a first main channel 41 connecting the water supply module 5 to the ingredient supplier 3 and a second main channel 42 connecting the ingredient supplier 3 to the fermentation module 1.

That is, the first main channel 41 may guide water supplied from the water supply module 5 to the ingredient supplier 3, and the second main channel 42 may guide the mixture of the ingredients and the water, which are extracted from the ingredient supplier 3, to the fermentation module 1.

The first main channel 41 may have one end 41A connected to the water supply module 5 and the other end connected to the ingredient supplier 3, more particularly, an inlet of an initial ingredient accommodation portion 31, which will be described below in more detail.

An ingredient supply valve 310 opening and closing the first main channel 41 may be installed in the first main channel 41. The ingredient supply valve 310 may be provided in the ingredient supplier 3.

The ingredient supply valve 310 may be opened when additives accommodated in the ingredient accommodation portions 31, 32, and 33 are put to open the first main channel 41. The ingredient supply valve 310 may be opened when the ingredient accommodation portions 31, 32, and 33 are cleaned to open the first main channel 41.

The second main channel 42 may have one end connected to a main channel connection portion 115 of the fermentation module 1 and the other end connected to the ingredient supplier 3, more particularly, an outlet 33B of a final ingredient accommodation portion 33, which will be described below in more detail.

A main valve 40 opening and closing the second main channel 42 may be installed in the second main channel 42. Also, a main check valve 314 for allowing the fluid to flow from the ingredient supplier 3 to the fermentation module 1 may be installed in the second main channel 42. That is, the main check valve 314 may prevent the fluid from flowing back to the ingredient supplier 3.

The main check valve 314 may be disposed between the main valve 40 and the ingredient supplier 3 with respect to the second main channel 42.

The main valve 40 may be opened when the water is supplied to the fermentation container 12 to open the second main channel 42. The main valve 40 may be closed while the fermenter 112 is cooled to close the second main channel 42. The main valve 40 may be opened when the air is injected into the fermentation container 12 to open the second main channel 42. The main valve 40 may be opened when the additives are supplied into the fermentation container 1 to open the second main channel 42. The main valve 40 may be closed to seal the inside of the fermentation container 12 during the fermentation of the ingredients. The main valve 40 may be closed to seal the inside of the fermentation container 12 when the beverage is aged and stored. The main valve 40 may be opened when the beverage is dispensed by the beverage dispenser 6 to open the second main channel 4. The beverage within the fermentation container 1 may pass through the main valve 40 to flow to the beverage dispenser 6.

The main channels 41 and 42 may be provided as one continuous channel when the beverage maker does not include the ingredient supplier 3.

When the beverage maker includes the ingredient supplier 3, the beverage maker may further include a bypass channel 43 configured to allow the water or the air to bypass the ingredient accommodation portions 31 and 32.

The bypass channel 43 may bypass the ingredient accommodation portions 31, 32, and 33 and then be connected to the first main channel 41 and the second main channel 42.

The bypass channel 43 may have one end connected to the first main channel 41 and the other end connected to the second main channel 42. In more detail, the bypass channel 43 may have one end 43A connected to the first main channel 41 between the water supply module 5 and the ingredient supply valve 310 and the other end 43B connected to the second main channel 42 between the main valve 40 and the ingredient supplier 3.

A bypass valve 35 opening and closing the bypass channel 43 may be installed in the bypass channel 43.

The bypass valve 35 may be opened when the water supplied from the water supply module 5 is supplied to the fermentation container 12 to open the bypass channel 43. The bypass valve 35 may be opened when the air injected from the air injector 8 is supplied to the fermentation container 12 to open the bypass channel 43. The bypass valve 35 may be opened when the bypass channel 43 is cleaned to open the bypass channel 43.

Also, a bypass check valve 324 allowing the fluid to flow from the first main channel 41 to the second main channel 42 may be installed in the bypass channel 43. That is, the fluid may flow only from the first main channel 41 to the second main channel 42 but may not flow in the opposite direction.

The bypass check valve 324 may be disposed between the bypass valve 35 and the second main channel 42 with respect to the bypass channel 43.

Hereinafter, the ingredient supplier 3 will be described in detail.

When beer is made by using the beverage maker, the ingredients for making the beer may include water, malt, a fermentation facilitator (e.g., yeast), hop, a flavouring additive, and the like.

The beverage maker may include all of the ingredient supplier 3 and the fermentation container 12. The ingredients for making the beverage may be accommodated to be divided into the ingredient supplier and fermentation container 12. A portion of the ingredients for making the beverage may be accommodated in the fermentation container 12, and the remaining ingredients may be accommodated in the ingredient supplier 3. The remaining ingredients accommodated in the ingredient supplier 3 may be supplied to the fermentation container 12 together with the water supplied from the water supply module 5 and mixed with the portion of the ingredients accommodated in the fermentation container 12.

A main ingredient that is essential for making the beverage may be accommodated in the fermentation container 12, and the additives added to the main ingredient may be accommodated in the ingredient supplier 3. In this case, the additives accommodated in the ingredient supplier 3 may be mixed with the water supplied from the water supply module 5 and supplied to the fermentation container 12 and then be mixed with the main ingredient accommodated in the fermentation container 12.

The main ingredient accommodated in the fermentation container 12 may have a capacity greater than that of other ingredients. For example, when the beer is made, the main material may be the malt of the malt, the fermentation facilitator, the hop, and the flavouring additive. Also, the additive accommodated in the ingredient supplier 3 may be the other ingredient except for the malt of the ingredient for making the beer, for example, the fermentation facilitator, the hop, and the flavouring additive.

The beverage maker may not include the ingredient supplier 3 but include the fermentation container 12. In this case, the main ingredient may be accommodated in the fermentation container 12, and the user may directly put the additives into the fermentation container 12.

If the beverage maker includes all the ingredient supplier 3 and the fermentation container 12, the beverage may be more easily made. Hereinafter, the case in which the beverage maker includes all of the ingredient supplier 3 and the fermentation container, will be described as an example. However, this embodiment is not limited to the case in which the beverage maker includes all of the ingredient supplier 3 and the fermentation container 12.

The ingredients within the fermentation container 12 may be fermented as time elapses, and the beverage made in the fermentation container 12 may flow to the second main channel 42 through the main channel connection portion 115 and also flow from the second main channel 42 to the beverage dispenser 6 so as to be dispensed.

The ingredients that are necessary for making the beverage may be accommodated in the ingredient supplier 3, and the water supplied from the water supply module 5 may pass through ingredient supplier 3. For example, when the beverage made in the beverage maker is beer, the ingredient accommodated in the ingredient supplier 3 may be the fermentation facilitator, the hop, the flavouring additive, and the like.

The ingredient accommodated in the ingredient supplier 3 may be directly accommodated into an ingredient accommodation portions 31, 32, and 33 provided in the ingredient supplier 3. At least one ingredient accommodation portion 31, 32, and 33 may be provided in the ingredient supplier 3. The plurality of ingredient accommodation portions 31, 32, and 33 may be provided in the ingredient supplier. In this case, the ingredient accommodation portions 31, 32, and 33 may be partitioned with respect to each other.

Inlets 31A, 32A, and 33A through which the fluid is introduced and outlets 31B, 32B, and 33B through which the fluid is discharged may be provided in the ingredient accommodation portions 31, 32, and 33, respectively. The fluid introduced into the inlet of one ingredient accommodation portion may be mixed with the ingredients within the ingredient accommodation portions and then discharged through the outlet.

The ingredients accommodated in the ingredient supplier 3 may be accommodated in ingredient containers C1, C2, and C3. In this case, the ingredient containers C1, C2, and C3 may be accommodated in the ingredient accommodation portions 31, 32, and 33, and each of the ingredient accommodation portions 31, 32, and 33 may be called an ingredient container mounting portion.

The ingredient containers C1, C2, and C3 may be composed of a capsule or a pod, but is not limited thereto.

When the ingredients are accommodated in the ingredient containers C1, C2, and C3, the ingredient supplier 3 may be configured so that the ingredient containers C1, C2, and C3 are seated and withdrawn. The ingredient supplier may be provided as an ingredient containers kit assembly in which the ingredient containers C1, C2, and C3 are separably accommodated.

For example, a first additive, a second additive, and a third additive may be accommodated in the ingredient supplier 3. The first additive may be the fermentation facilitator, the second additive may be the hop, and the third additive may be the flavouring additive. The ingredient supplier 3 may include a first ingredient container mounting portion 31 in which a first ingredient container C1 containing the first additive is accommodated, a second ingredient container mounting portion 32 in which a second ingredient container C2 containing the second additive is accommodated, and a third ingredient container mounting portion 33 in which a third ingredient container C3 containing the third additive is accommodated.

The ingredients contained in the ingredient accommodation portion or the ingredient containers C1, C2, and C3 may be extracted by a water pressure of the water supplied from the water supply module 5.

When the ingredients are extracted by the water pressure, the water supplied from the water supply module 5 to the first main channel 41 may pass through the ingredient accommodation portion or the ingredient containers C1, C2, and C3 and then be mixed with the ingredients, and the ingredients accommodated in the ingredient accommodation portion or the ingredient containers C1, C2, and C3 may flow to the second main channel together with the water.

A plurality of additives different from each other may be accommodated to be divided in the ingredient supplier 3. For example, when the beer is made, the plurality of additives accommodated in the ingredient supplier 3 may be the fermentation facilitator, the hop, and the flavouring additive, which are accommodated to be divided from each other.

When the plurality of ingredient accommodation portions are provided in the ingredient supplier 3, the plurality of ingredient accommodation portions 31, 32, and 33 may be connected in series to each other in a flow direction of the water.

In more detail, the ingredient supplier 3 may include at least one connecting channel 311 and 312 connecting the outlet of one ingredient accommodation portion of the plurality of ingredient accommodation portions 31, 32, and 33 to the inlet of the other ingredient accommodation portion.

Also, the plurality of ingredient accommodation portions 31, 32, and 33 may include an initial ingredient accommodation portion 31 and a final ingredient accommodation portion 33. The plurality of ingredient accommodation portions 31, 32, and 333 may further include an intermediate ingredient accommodation portion 32.

The inlet 31A of the initial ingredient accommodation portion 31 may be connected to the first main channel 41, and the outlet 33B of the final ingredient accommodation portion 33 may be connected to the second main channel 42.

The intermediate ingredient accommodation portion 32 may be disposed between the first ingredient accommodation portion 31 and the second ingredient accommodation portion 33 in the flow direction of the fluid. The inlet 32A and the outlet 32B of the intermediate ingredient accommodation portion 32 may be connected to the connecting channels 311 and 312 different from each other.

As illustrated in Fig. 1, when three ingredient accommodation portions are provided in the ingredient supplier 3, the outlet 31B of the final ingredient accommodation portion 31 may be connected to the inlet 32A of the intermediate ingredient accommodation portion 32 through the first connecting channel 311, and the outlet 32B of the intermediate ingredient accommodation portion 32 may be connected to the inlet 33A of the final ingredient accommodation portion 33 through the second connecting channel 312.

In this case, the water introduced into the inlet 31A of the final ingredient accommodation portion 31 through the first main channel 41 may flow to the first connecting channel 311 through the outlet 31B together with the first additive accommodated in the initial ingredient accommodation portion 31.

The fluid (the mixture of the water and the first additive) introduced into the inlet 32A of the intermediate ingredient accommodation portion 32 through the first main channel 311 may flow to the second connecting channel 312 through the outlet 32B together with the second additive accommodated in the intermediate ingredient accommodation portion 32.

The fluid (the mixture of the water and the first and second additives) introduced into the inlet 33A of the final ingredient accommodation portion 33 through the second main channel 312 may flow to the second connecting channel 42 through the outlet 33B together with the third additive accommodated in the final ingredient accommodation portion 33.

The fluid (the mixture of the water and the first, second, and third additives) discharged through the second main channel 42 may be guided to the main channel connection portion 115 of the fermentation module 1 and then introduced into the fermentation container 12.

However, the configuration of the ingredient supplier is not limited thereto. For example, when the intermediate ingredient accommodation portion is not provided, two ingredient accommodation portions may be provided in the ingredient supplier 3. In this case, one ingredient accommodation portion may be the initial ingredient accommodation portion, and the other ingredient accommodation portion may be the final ingredient accommodation portion. The outlet of the initial ingredient accommodation portion and the inlet of the final ingredient accommodation portion may be connected to each other by the connecting channel.

For another example, when the intermediate ingredient accommodation portion is provided in plurality, four or more ingredient accommodation portions may be provided in the ingredient supplier 3. In this case, one ingredient accommodation portion may be the initial ingredient accommodation portion, the other ingredient accommodation portion may be the final ingredient accommodation portion, and the remaining ingredient accommodation portion may be the intermediate ingredient accommodation portion. In this case, since the connection between the ingredient accommodation portions in series is easily understood by the person skilled in the art, their detailed descriptions will be omitted.

Since the plurality of ingredient accommodation portions 31, 32, and 33 are connected in series to each other, the channel configuration of the ingredient supplier 3 may be simplified. Also, since the additives contained in the ingredient containers C1, C2, and C3 are extracted at once, a time taken to extract the additives may decrease. Also, the ingredient supplier 3 may be minimized in water leakage point to improve reliability.

When the ingredients accommodated in the ingredient supplier 3 are accommodated in the ingredient containers C1, C2, and C3, the initial ingredient accommodation portion 31 may be called an initial ingredient container mounting portion, the intermediate ingredient accommodation portion 32 may be called an intermediate ingredient container mounting portion, and the final ingredient accommodation portion 33 may be a final ingredient container mounting portion.

Hereinafter, the water supply module 5 will be described in detail.

The water supply module 5 includes a water tank 51, and may include a water supply pump 52 for pumping water within the water tank 51, and a water supply heater 53 for heating the water pumped by the water supply pump 52.

The water tank 51 and the water supply pump 52 may be connected to a water tank discharge channel 55A, and the water contained in the water tank 51 may be introduced into the water supply pump 52 through the water tank discharge channel 55A.

The water supply pump 52 and one end of the first main channel 41 may be connected to a water supply channel 55B, and the water discharged from the water supply pump 52 may be guided to the first main channel 41 through the water supply channel 55B.

A muffler 56A reducing noise and a flow meter 56B measuring a flow rate of the water discharged from the water tank 51 may be installed in the water tank discharge channel 55A. The muffler 56A may be disposed in front of the flow meter 56B with respect to the flow direction of the water.

Also, a flow rate control valve 54 for controlling the flow rate of the water discharged from the water tank 51 may be installed in the water tank discharge channel 55A. The flow rate control valve 54 may include a step-in motor.

Also, a thermistor 54A for measuring a temperature of the water discharged from the water tank 51 may be installed in the water tank discharge channel 55A. The thermistor 54A may be built in the flow rate control valve 54.

A water supply check valve 59 for preventing the water from flow back to the water supply pump 52 may be installed in the water supply channel 55B.

The water supply heater 53 may be installed in the water supply channel 55B.

The water supply heater 53 may be provided with a thermostat 58 that constantly adjusts the temperature of the water supply heater.

The water supply module 5 may further include a safety valve 53A. The safety valve 53A may communicate with the inside of the of the water supply heater 53. The safety valve 53A may restrict a maximum inner pressure of the water supply heater 53. For example, the safety valve 53A may restrict the maximum inner pressure of the water supply heater 53 to a pressure of about 3.0 bar.

The water supply module 5 may further include a water supply temperature sensor 57 for measuring a temperature of the water passing through the water supply heater 53. The water supply temperature sensor 57 may be connected to the water supply heater 53.

When the water supply pump 52 is driven, the water within the water tank 51 may be introduced into the water supply pump 52 through the water tank discharge channel 55A, and the water discharged from the water supply pump 52 may be heated in the water supply heater 53 while flowing through the water supply channel 55B and then be guided to the first main channel 41.

Hereinafter, the beverage dispenser 6 will be described.

The beverage dispenser 6 may be connected to the second main channel 42.

In more detail, the beverage dispenser 6 may include a dispenser 62 for dispensing the beverage and a beverage dispensing channel 61 connecting to the dispenser 62 to the second main channel 42.

The beverage dispensing channel 61 may connect the second main channel 42 to the dispenser 62. In more detail, the beverage dispensing channel 61 may have one end 61A connected between the main check valve 314 and the main valve 40 with respect to the second main channel 42 and the other end connected to the dispenser 62.

A beverage dispensing valve 64 opening and closing the beverage dispensing channel 61 may be installed in the beverage dispensing channel 61.

The beverage dispensing valve 64 may be opened when the beverage is dispensed to open the beverage dispensing channel 61. The beverage dispensing valve 64 may be opened when residual water is removed to open the beverage dispensing channel 61. The beverage dispensing valve 64 may be opened when the beverage dispenser is cleaned to open the beverage dispensing channel 61.

A decompression component 60 that prevents a pressure of the beverage passing through the beverage dispensing channel 61 from rapidly increasing may be installed in the beverage dispensing channel 61. The decompression component 60 may be installed behind the beverage dispensing valve 64 with respect to the dispensing direction of the beverage. The decompression component 60 may be disposed adjacent to the beverage dispensing valve 64.

The pressure of the beverage passing through the decompression component 60 may gradually decrease. The beverage passing through the decompression component 60 may be dispensed from the dispenser 62 and may not generate excessive bubbles.

When the beverage is dispensed, the beverage dispensing valve 64 may be opened. When the beverage is not dispensed, the closed state of the beverage dispensing valve 64 may be maintained.

In more detail, the dispenser 62 may include lever 620 When the user manipulates the lever 620, the beverage dispensing valve 64 may be opened, and when the lever 620 returns to its original position, the beverage dispensing valve 64 may be closed.

Hereinafter, the gas discharger 7 will be described in detail.

The gas discharger 7 may be connected to the fermentation module 1 to discharge a gas generated in the fermentation container 12.

In more detail, the gas discharger 7 may include a gas discharge channel 71 connected to the fermentation module 1, a gas pressure sensor 72 installed in the gas discharge channel 71, and a gas discharge valve 73 connected to the gas discharge channel 71. The gas discharge valve 73 may be disposed behind the gas pressure sensor 72 in the gas discharge direction.

The gas discharge channel 71 may be connected to the fermentation module 1, particularly, the fermentation lid 107. A gas discharge channel connection portion 121 to which the gas discharge channel 71 is connected may be provided in the fermentation lid 107.

The gas within the fermentation container 12 may flow into the gas discharge channel 71 through the gas discharge channel connection portion 121. The gas pressure sensor 72 may detect a pressure of the gas discharged to the gas discharge channel 71 through the gas discharge channel connection portion 121 within the fermentation container 12.

The gas discharge valve 73 may be turned on to be opened when the air is injected into the fermentation container 12 by the air injector 8. The beverage maker may uniformly mix the malt with the water by injecting the air into the fermentation container 12. Here, foam generated in the liquid malt may be discharged from the upper portion of the fermentation container 12 to the outside through the gas discharge channel 71 and the gas discharge valve 73.

The gas discharge valve 73 may be opened or closed at least one time to detect fermentation during the fermentation process.

The gas discharger 7 may further include the safety valve 75 connected to the gas discharge channel 71. The safety valve 75 may be disposed behind the gas pressure sensor 72 with respect to the gas flow direction.

The safety valve 75 may restrict a maximum pressure of the fermentation container 12 and the gas discharge channel 71. For example, the safety valve 75 may restrict the maximum pressure of the fermentation container 12 and the gas discharge channel 71 to a pressure of about 3.0 bar.

The gas discharger 7 may further include a pressure release valve 76.

The pressure release valve 76 may be connected to the gas discharge channel 71. The pressure release valve 76 and the gas discharge valve 73 may be selectively opened/closed.

The pressure release valve 76 may be disposed behind the gas pressure sensor 72 with respect to the gas flow direction.

A noise reducing device 77 may be mounted on the pressure release valve 76. The noise reducing device 77 may include at least one of an orifice structure and a muffler structure.

Even though the pressure release valve 76 is opened, an inner pressure of the fermentation container 12 may gradually decrease by the noise reducing device 77.

When the fermentation of the beverage progresses, the pressure release valve 76 may be opened to release the pressure in the state in which the inner pressure of the fermentation container 12 increases. The noise reducing device 77 may effectively reduce noise generated due to a difference in pressure of the inside and outside of the fermentation container 12.

The pressure release valve 76 may be opened/closed in the fermentation process in which the inner pressure is relatively high.

Hereinafter, the air injector 8 will be described.

The air injector 8 may be connected to the water supply module 55B or the first main channel 41 to inject air.

The air injector 8 may be connected to an opposite side of a sub channel 91, which will be described later, with respect to the water supply heater 53.

In this case, the air injected into the air injector 8 may pass through the water supply heater 53 to flow to the sub channel 91 together with the residual water within the water supply heater 53. Thus, the residual water within the water supply heater 53 may be removed to maintain a clean state of the water supply heater 53.

Alternatively, the air injected from the air injector 8 to the first main channel 41 may successively pass through the bypass channel 43 and the second main channel 42 and then be injected into the fermentation container 12. Thus, stirring or aeration may be performed in the fermentation container 12.

Alternatively, the air injected from the air injector 8 to the first main channel 41 may be guided to the ingredient supplier 3 to flow to the ingredient container mounting portions 31, 32, and 33. The residual water or residues within the ingredient containers C1, C2, and C3 or the ingredient container mounting portions 31, 32, and 33 may flow to the second main channel 42 by the air injected by the air injector 8 and then be discharged to the beverage dispenser 6. The ingredient containers C1, C2, and C3 and the ingredient container mounting portions 31, 32, and 33 may be cleanly maintained by the air injected by the air injector 8.

The air injector 8 may include an air injection channel connected to the water supply channel 55B or the first main channel 41 and an air injection pump 82 connected to the air injection channel 81.

An air injection check valve 83 preventing the water within the water supply channel 55B from being introduced into the air injection pump 82 through the air injection channel 81 may be installed in the air injection channel 81.

The air injection pump 82 may pump the air to the air injection channel 81. The discharge portion of the air injection pump 82 may be connected to the air injection channel 81.

The air passing through an air filter 150 may be suctioned into the suction portion of the air injection pump 82.

In more detail, the beverage maker may include an air filter 150 and an air suction channel 152 connected to the air filter 150. A muffler 150A reducing noise generated when the air is suctioned may be installed in the air suction channel 152.

The air suction channel 152 may be branched into a first suction channel 84 and a second suction channel 153. The first suction channel 84 may be connected to a suction portion of the air injection pump 82, and the second suction channel 153 may be connected to a suction portion of the air supply pump 151 to be described later.

However, this embodiment is not limited thereto, and thus, air passing through different filters may be suctioned into the suction portion of the air injection pump 82 and the suction portion of the air supply pump 151.

Hereinafter, the air controller 15 will be described in detail.

The air controller 15 may control a pressure between an inner wall of the fermenter 112 and an outer surface of the fermentation container 12.

The air controller 15 may supply air into a space between the fermentation container 12 and the fermenter 112. On the other hand, the air controller 15 may exhaust the air within the space between the fermentation container 12 and the fermenter 112 to the outside.

The air conditioner 15 may include an air supply pump 151, an air supply channel 154 connecting the air supply pump 151 to the fermentation module 1, an exhaust channel 157 connected to the air supply channel 154 to exhaust air to the outside, and an exhaust valve 156 connected to the exhaust channel 157.

The air supply pump 151 may inject air into the air supply channel 154. The discharge portion of the air supply pump 151 may be connected to the air supply channel 154, and the suction portion may be connected to the second suction channel 153 described above.

The air supply channel 154 may be connected to the fermentation module 1, particularly, the fermentation lid 107. An air supply channel connection portion 117 to which the air supply channel 154 is connected may be provided in the fermentation module 1. The air supply channel connection portion 117 may communicate with the space between the inner wall of the fermenter 112 and the outer surface of the fermentation container 12.

The air injected from the air supply pump 151 to the air supply channel 154 may be guided between the outer surface of the fermentation container 12 and the inner wall of the fermenter 112. The air supplied into the fermenter 112 may press the fermentation container 12 between the outer surface of the fermentation container 12 and the inner wall of the fermenter 112.

The beverage within the fermentation container 12 may be pressed by the fermentation container 12 that is contracted by the air. When the main valve 40 and the beverage dispensing valve 64 are opened, the beverage may pass through the main channel connection portion 115 to flow to the second main channel 42. The beverage flowing from the fermentation container 12 to the second main channel 42 may be dispensed to the outside through the beverage dispenser 6.

The air supply pump 151 may supply air so that a predetermined pressure occurs between the fermentation container 12 and the fermenter 112. Thus, a pressure at which the beverage within the fermentation container 12 is easily dispensed may be occur between the fermentation container 12 and the fermenter 112.

The air supply pump 151 may be maintained in the turn-off state while the beverage is dispensed. When the beverage is completely dispensed, the air pump 82 may be driven for next beverage dispensing and then stopped.

Thus, the beverage maker may dispense the beverage to the beverage dispenser 6 in the state in which the fermentation container 12 is disposed within the fermentation module 1 without withdrawing the fermentation container 12 to the outside of the fermentation module 1.

The exhaust channel 157 may function as an air exhaust passage, through which the air between the fermentation container 12 and the fermenter 112 is exhausted to the outside, together with a portion of the air supply channel 154.

The exhaust channel 157 may be disposed outside the fermentation module 1. The exhaust channel 157 may be connected to a portion of the air supply channel 154, which is disposed outside the fermenter 112.

The air supply channel 154 may include a first channel connected between the air supply pump 151 to a connection portion 157A, to which the exhaust channel 157 is connected, and a second channel between the connection portion 154A, to which the exhaust channel 157 is connected, and the air supply channel connection portion 117. The first channel may be an air supply channel for guiding the air pumped by the air supply pump 151 to the second channel. Also, the second channel may be an air supply and exhaust-combined channel for supplying the air passing through the air supply channel into the space between the fermenter 112 and the fermentation container 12 or guiding the air discharged from the space between the fermenter 112 and the fermentation container 12 to the exhaust channel 157.

The exhaust channel 156 may exhaust the air through the exhaust channel 157.

The exhaust valve 156 may be opened so that the air between the fermentation container 12 and the fermenter 112 is exhausted to the outside when the fermentation container 12 is expanded while the beverage is made. The exhaust valve 156 may be opened when the water is supplied by the water supply module 5. The exhaust valve 156 may be opened when the air is injected by the air injector 8.

The exhaust valve 156 may be opened so that the air between the fermentation container 12 and the fermenter 112 is exhausted when the beverage within the fermentation container 12 is completely dispensed. The user may take the fermentation container 12 out of the fermenter 112 when the beverage is completely dispensed. This is done because safety accidents occur when the inside of the fermenter 112 is maintained at a high pressure. The exhaust valve 156 may be opened when the beverage within the fermentation container 12 is completely dispensed.

The air controller 15 may further include an air restriction valve 159 that restricts the air pumped by the air supply pump 151 and supplied between the fermentation container 12 and the fermenter 112. The air restriction valve 159 may be a check valve.

The air restriction valve 159 may be installed in the air supply channel 154. In more detail, the air restriction valve 159 may be installed between the air supply pump 151 of the air supply channel 154 and the connection portion 157A of the exhaust channel 157.

Hereinafter, the sub channel 91 will be described in detail.

The sub channel 91 may connect the water supply module 5 to the beverage dispenser 6. In more detail, the sub channel 91 may have one end 91A connected to the water supply channel 55B and the other end 91B connected to the beverage dispensing channel 61.

The sub channel 91 may be connected between the water supply pump 52 and the water supply heater 53 with respect to the water supply channel 55B.

Also, the sub channel 91 may be connected to the connection portion 61A of the second main channel 42 and the beverage dispensing valve 64 with respect to the beverage dispensing channel 61.

The water supplied by the water supply pump 52 and the air pumped by the air injection pump 82 may be guided to the beverage dispensing channel 61 through the sub channel 91 and then be dispensed to the dispenser 62. Thus, the residual water or the beverage remaining in the beverage dispenser 6 may be removed.

A sub valve 92 opening and closing the sub channel 91 may be installed in the sub channel 91.

The sub valve 92 may be opened when the beverage is dispensed, or the cleaning is performed to open the sub channel 91.

Also, a sub check valve 93 for preventing the beverage of the beverage dispensing channel 61 from flowing back to the water supply module 5 may be installed in the sub channel 91. The sub check valve 93 may be disposed between the sub valve 92 and the beverage dispensing channel 61 with respect to the sub channel 91.

The sub channel 91 may function as a residual water removing channel of the water supply module 5. For example, when the air injection pump 82 is turned on in the state in which the bypass valve 35 and the ingredient supply valve 310 are closed, the sub valve 92 is opened, the air injected into the air injection channel 81 may pass through the water supply heater 53 to flow to the sub channel 91. Then, the air may pass through the sub valve 92 to flow to the beverage dispensing channel 61 and then be dispensed to the dispenser 62. In this process, the air may be dispensed together with the water supply module 5, more particularly, the residual water remaining the water supply heater 53 and the water supply channel 55B so that residual water is removed.

Also, the sub channel 91 may function as a cleaning channel. In more detail, when a portion of the beverage is disposed from the dispenser 62, and a long time elapses till the next dispensing, the dispenser 62 may be cleaned by allowing water to flow into the sub channel 91 before performing the next dispensing.

Hereinafter, the air removal module 50 will be described in detail.

The water supply pump 52 may include a gear pump. As the gear pump is used, a lubricant (grease) applied to a surface of an inner rotor and an inner wall of the pump is gradually exhausted. Then, when used over a certain number of times, a pressure difference between an inlet and an outlet of the water supply pump 52, which is generated by the gear pump, may gradually decrease. The inlet of the water supply pump 52 may be connected to the water tank discharge channel 55A, and the outlet may be connected to the water supply channel 55B.

The air removal module 50 may temporarily remove flow path resistance acting on the water supply pump 52. In more detail, the air in the water supply pump 52 may be removed by the air removal module 50, and instead, the water in the water tank 51 may be introduced into the water supply pump 52 by a head pressure. Thus, the water supply pump 52 may smoothly supply water through the water supply channel 55B.

In more detail, the air removal module 50 may include an air removal channel 50A and an air removal valve 50B connected to the air removal channel 50A.

The air removal channel 50A may be connected to the water supply channel 55B. That is, the air removal channel 50A may be branched from the water supply channel 55B.

The air removal channel 50A may be connected to a point of the water supply channel 55B, which is adjacent to the water supply pump 52. For example, the air removal channel 50A may be connected between the water supply pump 52 and the water supply heater 53 in the water supply channels 55B. In this case, the connection portion between the air removal channel 50A and the water supply channel 55B may be closer to the water supply pump 52 than the water supply heater 52.

The air removal valve 50B may include a solenoid valve.

When the air removal valve 50B is opened, the air removal channel 50A may be opened, and air in the air removal channel 50A may be discharged to the outside through the air removal valve 50B.

As a result, the air in the water supply pump 52 may flow into the air removal channel 50A, and the water in the water tank 51 may be introduced into the water supply pump 52 by the head pressure.

The beverage maker may maintain the air removal valve 50B in the closed state when the water supply pump 52 operates so that the water does not flow through the water supply channel 55B, and also in the state in which the operation of the water supply pump 52 is stopped, the air removal valve 50B may be opened.

The beverage maker may allow the water supply pump 52 to operate after the air removal valve 50B is opened for a predetermined time, and the air removal valve 50A is closed when water is empty and refilled in the water tank 51.

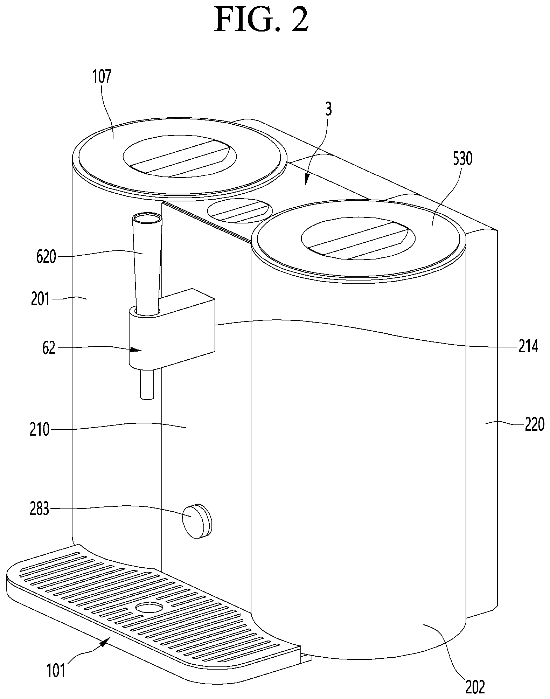

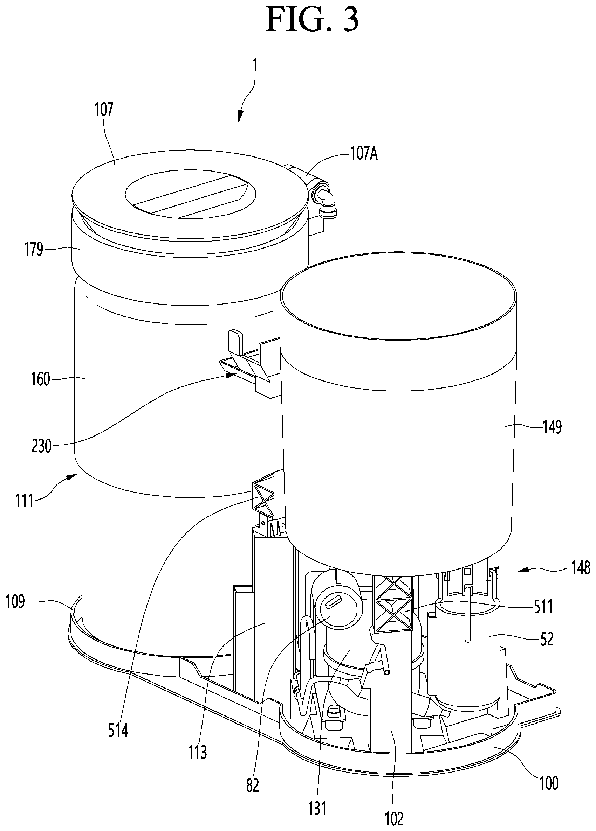

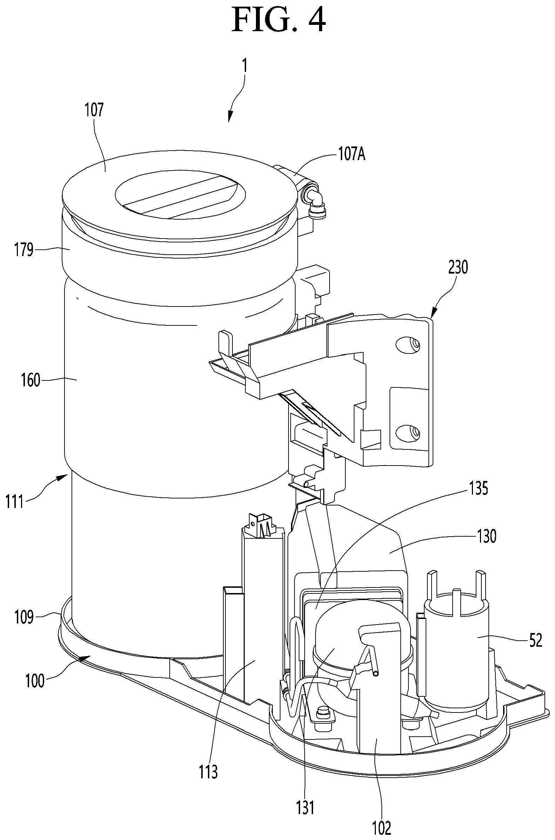

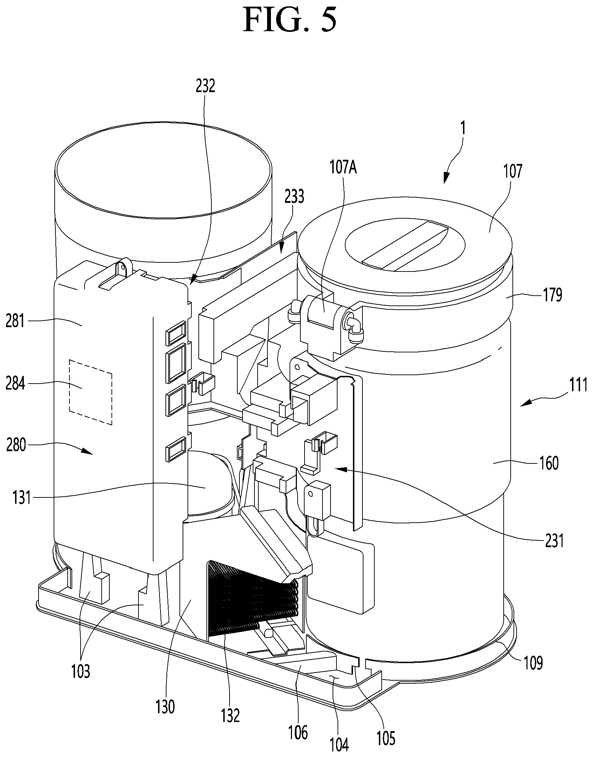

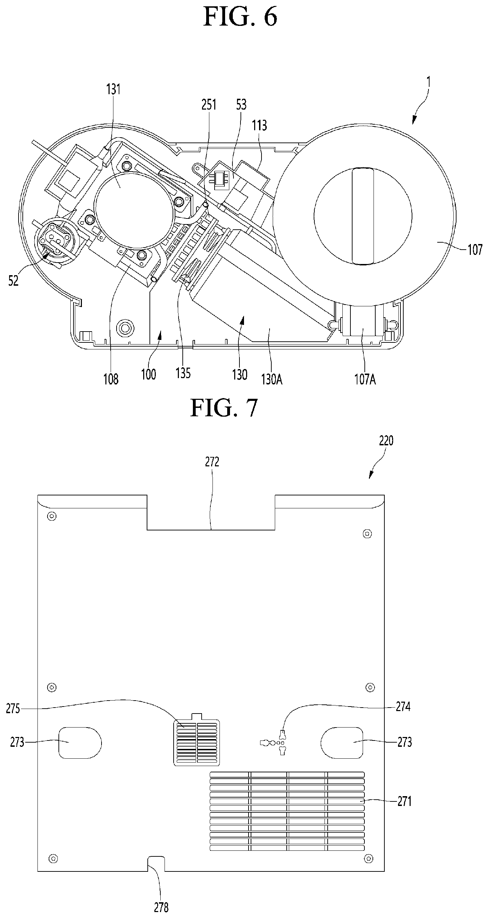

Fig. 2 is a perspective view of the beverage maker according to an embodiment, Fig. 3 is a perspective view illustrating a state in which each cover, a residual water tray, and the ingredient supplier are removed in the beverage maker of Fig. 2, Fig. 4 is perspective view illustrating a state in which a water tank case is removed in the beverage maker of Fig. 3, Fig. 5 is a rear perspective view illustrating the beverage maker of Fig. 3, and Fig. 6 is a plan view illustrating a state in which a main frame is removed in the beverage maker of Fig. 4.

The beverage maker may include a base 100. The base 100 may constitute an outer appearance of a bottom surface of the beverage maker and support the fermentation module 1, the water tank 51, the water supply heater 53, and a main frame 130, which are disposed thereabove. As necessary, the configuration supported by the base 100 may be added, removed, or changed.

The beverage maker may further include a residual water tray 101 that receives and stores a beverage dropping from the dispenser 62. The residual water tray 101 may be integrated with the base 100 or be coupled to the base 10. The residual water tray 101 may be disposed in front of the base 100.

The medium cassette 1 may have an approximately cylindrical shape. The fermentation module 1 may be supported by the base 100 at a lower side.

The fermentation module 1 may be disposed above the base 100. In more detail, the fermentation module 1 may be disposed and supported on the fermentation module support portion 109 of the base 100.

As described above, the fermentation module 1 may include a fermenter module 111 and a fermentation lid 107. A fermentation container 12 (see Fig. 1) may be accommodated in the fermenter module 111.

A fermenter 112 (see Fig. 1) may be accommodated in the fermentation case 160. An insulation portion may be disposed between the fermenter 112 and the fermentation case 160 to insulate the fermenter 112. Here, an evaporator (see reference numeral 134 of Fig. 1) and a heater (see reference numeral 14 of Fig. 1) may be disposed between the insulation portion and the fermenter 112. That is, the insulation portion may surround the evaporator 134 and/or the heater 14 together with the fermenter 112. Thus, the fermenter 112 may be easily controlled in temperature.

The fermentation lid 107 may be disposed above the fermenter module 111 to open and close the fermenter module 111 at an upper side.

A lid seating body 179 may be disposed above the fermentation case 160 to support the fermentation lid 107 at a lower side.

The fermentation case 160 may be placed on a fermentation module support portion 109 of the base 100.

The fermentation lid 107 may be separably connected to the fermenter module 111, slidably connected to the fermenter module 111, or rotatably connected to the fermenter module 111. For example, the fermentation lid 107 may be hinge-coupled to the fermenter module 111.

A first hinge connection portion 107A protruding backward may be provided on the fermentation lid 107. The first hinge connection portion 107A may be hinge-coupled to the fermentation module 179.

The refrigeration cycle device 13 may include a compressor 131, a condenser 132, and the evaporator 134 (see of Fig. 1). The beverage maker may further include a blower fan 135 cooling the condenser 132.

The refrigeration cycle device 13 may include a heat pump. The refrigeration cycle device 13 may include a refrigerant channel switching valve (not shown). The refrigerant channel switching valve may include a four-way valve. The refrigerant channel switching valve may be connected to each of a suction channel of the compressor 131 and a discharge channel of the compressor, may be connected to the condenser 132 through a condenser connection channel, and may be connected to the evaporator 134 through an evaporator connection channel.

When the fermenter 112 is cooled, the refrigerant channel switching valve may guide a refrigerant compressed in the compressor 131 to the condenser 132 and guide a refrigerant discharged from the evaporator 134 to the compressor 131.

When the fermenter 112 is heated, the refrigerant channel switching valve may guide the refrigerant compressed in the compressor 131 to the evaporator 134 and guides the refrigerant discharged from the condenser 132 to the compressor 131.

The base 100 may support at least a portion of the refrigeration cycle device 13. For example, the compressor 131 of the refrigeration cycle device 13 may be supported by the base 100.

Also, a refrigerant pipe (not shown) may be connected to the fermentation module 1. The refrigerant pipe may be provided in the refrigeration cycle device 13 (see Fig. 1). In more detail, the refrigerant pipe may connect the condenser 132 to the evaporator 134 (see Fig. 1). An expansion mechanism (not shown) may be installed in the refrigerant pipe.

The refrigerant pipe may be disposed to pass between the first coupling body 231 and the base 100 of the main frame 230 to be described later.

The water tank case 149 in which the water tank 51 (see Fig. 1) is accommodated may be disposed above the base 100. The water tank case 149 may be a circular hollow cylinder with an opened top surface. The user may insert the water tank 51 into the water tank case 149 or take the water tank 51 out of the water tank case 149.

An inner bottom surface of the water tank case 149 may be spaced apart from the top surface of the base 100 in the vertical direction.

A support body 102 supporting the water tank case 149 may be disposed on the base 100, and a first support portion 511 supported to contact the support body 102 may be disposed on the water tank case 149.

The support body 102 may be provided to protrude upward from the base 100, and the first support portion 511 may be provided to protrude downward from the water tank case 149. Since the support body 102 and the first support portion 511 are lengthily disposed vertically, the inner bottom surface of the water tank case 149 may be spaced apart from the base 100.

In addition, a heater case 113 in which the water supply heater 53 (see Fig. 1) is accommodated may be installed on the base 100, and a second support portion 514 supported by the heater case 113 may be installed on the water tank case 149.

The heater case 113 may be lengthily disposed vertically, and the inner bottom surface of the water tank case 149 may be spaced apart from the base 100. That is, one side of the water tank 51 may be supported by the support body 102 disposed on the base 100, and the other side may be supported by the heater case 113.

A machine room 148 may be defined between the water tank case 149 and the base 100. The machine room 148 may mean a space spaced between the water tank case 149 and the base 100. Configurations such as the water supply pump 52, the air injection pump 82, and the compressor 131 may be disposed in the machine room 148.

The water tank case 149 may be horizontally spaced apart from the fermentation module 1. In more detail, the water tank case 149 and the fermentation module 1 may be horizontally spaced apart from each other.

The beverage maker may further include a water tank lid 530 covering the opened top surface of the water tank 51 (see Fig. 1). The water tank 51 may have a hollow cylindrical shape with an open top surface, and the water tank lid 530 may open and close the open top surface of the water tank 51.

The water tank lid 530 may be detachably mounted on the water tank 51 or may be hinged to the water tank 51.

The water tank lid 530 may have a shape that is equal to or similar to the fermentation lid 107. Thereby, the beverage maker may have a sense of unity by design.

A height from the base 100 to the fermentation lid 107 may be equal to that from the base 100 to the water tank lid 530. In more detail, a top surface from the base 100 to the fermentation lid 107 may have the same height as a top surface from the base 100 to the water tank lid 530.

The beverage maker may include covers 201, 202, 210, and 220 defining an outer appearance of the beverage maker. The covers 201, 202, 210, and 220 may be placed on the base 100.

The covers 201, 202, 210, and 220 may be integrated with each other, but this embodiment is not limited thereto. For example, a plurality of members may be coupled each other in terms of manufacturing and maintenance.

The covers 201, 202, 210, and 220 may include a fermentation module cover 201, a water tank case cover 202, a front cover 210, and a rear cover 220.

Each of the fermentation module cover 201 and the water tank case cover 202 may have a hollow shape. A portion of a circumferential surface of each of the fermentation module cover 201 and the water tank case cover 202 may be opened. The opened portion of the circumferential surface may be disposed inside the beverage maker and may not be exposed to the outside, and thus, the beverage maker may be improved in design.

The fermentation module cover 201 and the water tank case cover 202 surround at least portions of outer circumferences of the fermentation module 1 and the water tank case 149, respectively. The fermentation module cover 201 and the water tank cover 51 fix the fermentation module 1 and the water tank case 149 to protect the fermentation module 1 and the water tank case 149 against an external impact.

The fermentation module cover 201 and the water tank case cover 202 may be horizontally disposed to be spaced apart from each other.

The fermentation module cover 201 and the water tank case cover 202 may have the same height and/or diameter. Thus, the beverage maker may be improved in design due to symmetric structure and unity of the outer appearance thereof.

The top surface of the fermentation module cover 201 may be opened, and the fermentation lid 109 may be exposed upward. Also, the top surface of the water tank case cover 202 may be opened, and the water tank lid 530 may be exposed upward. The user may easily open and close the fermentation lid 107 and the water tank lid 530.

The front cover 210 may define an outer appearance of the front side of the beverage maker. The front cover 210 may cover a portion between the fermentation module cover 201 and the water tank case cover 202 at the front side.

The front cover 210 may be disposed between the front fermentation module cover 201 and the water tank case cover 202. The front cover 210 may have both ends respectively contacting the front fermentation module cover 201 and the water tank case cover 202.

The front cover 210 may have a flat plate shape that is vertically disposed.

The front cover 210 may have the same height as each of the front fermentation module cover 201 and the water tank case cover 202.

The front cover 210 may be mounted on the dispenser 62. The dispenser 62 may be disposed closer to an upper end of the front cover 210 than a lower end of the front cover 210. The dispenser 62 may be disposed above the residual water tray 101. The user may manipulate the lever 620 of the dispenser 62 to dispense the beverage.

In more detail, a dispenser mounting portion 214 on which the dispenser 62 is mounted may be disposed on the front cover 210. The dispenser mounting portion 214 may be disposed closer to an upper end of the front cover 210 than a lower end of the front cover 210.

The beverage maker may include a display (not shown) for displaying various pieces of information of the beverage maker. The display 282 may be disposed on the front cover 210.

The display 282 may be disposed at a portion of the front cover 210, which is not covered by the dispenser 62. That is, the display 282 may not overlap the dispenser 62 in the horizontal direction.

The display may include at least one display element of LCD, LED, or OLED, and a display PCB on which the display element is installed. The display PCB may be mounted on a rear surface of the front cover 210 and electrically connected to a controller 284 that will be described later.

The beverage maker may include an input part receiving a command related to the making of the beverage maker.

The input unit may include at least one of a touch screen receiving a user's command in a touch member, a rotary knob held by the user to rotate, and a button pushed by the user.

For example, the input unit may include the rotary knob 282. The rotary knob 283 may be disposed on the front cover 210. The rotary knob 283 may be disposed below the display.

The rotary knob 283 may function as a button that is pushed by the user. That is, the user may hold the rotary knob 283 so that the rotary knob 283 rotates, or the user may input a control command by pushing a front surface of the rotary knob 283.

Also, the input unit may include the touch screen receiving the user's command in the touch manner. The touch screen may be provided on the display, and the display may function as the touch screen.

The input part may be electrically connected to the controller 284 that will be described later.

Also, the beverage maker may further include a wireless communication module (not shown). This embodiment is not limited to kinds of wireless communication modules. For example, the wireless communication module may include a Bluetooth module and Wi-Fi module.

The wireless communication module may be disposed on a rear surface of the front cover 210.

The wireless communication module may be electrically connected to the controller 284 that will be described later. The beverage maker may wirelessly communicate with a separate mobile terminal and the like. The user may input a command, inquire making information, or monitor a making process in real time by using the mobile terminal.

The front cover 220 may define an outer appearance of the front side of the beverage maker. The rear cover 220 may cover a portion between the fermentation module cover 201 and the water tank case cover 202 at the rear side.

The ingredient supplier 3 may be disposed between the fermentation module 1 and the water tank 51. That is, the ingredient supplier 3 may be disposed between the fermentation module 1 and the water tank case 149.

The beverage maker may be compact, and the ingredient supplier 3 may be protected by the fermentation module 1 and the water tank case 149.

At least a portion of each of both side surfaces of the ingredient supplier 3 may be curved, and the curved surface may contact each of an outer circumference of the fermentation module cover 201 and an outer circumference of the water tank case cover 202.

The ingredient supplier 3 may be disposed above the base 100 so as to be vertically spaced apart from the base 100. The ingredient supplier 3 may be disposed above the main frame 230.

The ingredient supplier 3 may be disposed between the front cover 210 and the rear cover 220 in the front and rear direction. A front surface of the ingredient supplier 3 may be covered by the front cover 210, and a rear surface of the ingredient supplier 3 may be covered by the rear cover 220.

The ingredient supplier 3 may be installed at an approximately central upper portion of the beverage maker, and the user may open the ingredient supplier 3 to easily mount or separate ingredient containers C1, C2, and C3.

The beverage maker may include a main frame 230. At least a portion of the plurality of valves of Fig. 1 may be mounted on the main frame 230. That is, a plurality of valve mounting portions to which the valves are mounted may be disposed on the main frame 230. Also, the plurality of valves may include a flow rate control valve 54, an ingredient supply valve 310, a main valve 40, a bypass valve 35, an exhaust valve 156, a beverage dispensing valve 64, a sub valve 92, a gas discharge valve 73, and a pressure release valve 76.

The main frame 230 may be coupled to the fermentation module 1 and the water tank case 149, respectively. The main frame 230 may be spaced apart from the base 100 in the vertical direction.

The main frame 230 may be coupled from the rear side of the water tank case 149 and the fermentation module 1, and the plurality of valve mounting portions may be disposed on the rear surface of the main frame 230. Thus, when only the rear cover 220 is removed in the beverage maker, the user may directly access the plurality of valves, and thus maintenance and repair of the valves may be facilitated.

At least a portion of the main frame 230 may be disposed between the fermentation module 1 and the water tank 51. At least a portion of the main frame 230 may be disposed below the ingredient supplier 3.

In more detail, the main frame 230 includes a first coupling body 231 coupled to the fermentation module 1, a second coupling body 232 coupled to the water tank case 149, and a connection body which connects the first coupling body 231 to the second coupling body 232 and of which at least a portion is disposed between the fermentation module 1 and the water tank 51. The connection body 233 may be disposed below an ingredient supplier 3.

At least a portion of the second coupling body 232 may be disposed between the control module 280 and the water tank case 149 in the front and rear direction.

The number of valve mounting portions disposed on the first coupling body 231 may be greater than the number of valve mounting portions disposed on the second coupling body 232. This is done because the number of channels connected to the fermentation module 1 is greater than that of channels connected to the water tank 51, and the number of valves that restrict a flow of a fluid introduced into and discharged from the fermentation module 1 is greater than that of valves that restrict a flow of a fluid discharged from the water tank 51.

The beverage maker may include the control module 280.

The control module 280 may be an electric component of the beverage maker. The control module 280 may be mounted on the main frame 230 or the water tank case 149.

The control module 280 may be disposed behind the water tank case 149. The control module 280 may be disposed behind the second coupling body 232.

This is done because the number of valves disposed at the rear side of the fermentation module 1 is greater than the number of valves disposed at the rear side of the water tank case 149. Thus, a space within the beverage maker may be used efficiently, and the beverage maker may be compact.

The control module 280 may be lengthily disposed vertically.

A control module coupling portion 103 protruding upward may be disposed on the base 100, and the control module 280 may be coupled to and supported by the control module coupling portion 103.

The control module 280 may be coupled to the second coupling body 232 of the water tank case 149 and/or the main frame 230.

The control module 280 may include a main PCB and a PCB case 281 in which the main PCB is built. The main PCB may include a controller 284 substantially controlling an operation of each of the constituents of the beverage maker.

The PCB case 281 may be coupled to the main frame 230 and/or the water tank case 149 to safely protect the main PCB therein.

The controller 284 provided in the control module 280 may be electrically connected to the wireless communication module. For example, the controller 284 may receive a command received through the wireless communication module, and thus, the beverage may be made. Also, the controller 284 may transmit information related to the beverage maker or the beverage to be made from the wireless communication module to a separate mobile terminal.

Also, the controller 284 may receive the command inputted into the input part. For example, the controller 284 may make a beverage according to the command inputted by the rotary knob 283. Also, the controller 284 may control the display 282 to output various pieces of information of the beverage maker. For example, the controller 284 may display an amount of dispensed beverage, an amount of residual beverage, information related to completion of dispensing of the beverage, and the like through the display 282.

The controller 281A may control at least one of the water supply pump 52, the water supply heater 53, the air injection pump 82, the air supply pump 151, or the temperature controller 11. Also, the controller 281A may control at least one of the flow rate control valve 54, the ingredient supply valve 310, the main valve 40, the bypass valve 35, the exhaust valve 156, the beverage dispensing valve 64, the sub valve 92, the gas discharge valve 73, or the pressure release valve 76.

The controller 284 may receive a measured value of at least one of the flow meter 56, the thermistor 54A, the water supply temperature sensor 57, the temperature sensor 16, and the gas pressure sensor 72.

In more detail, the controller 284 may detect an inner pressure of the fermentation container 12 by the gas pressure sensor 72 and detect a temperature of the fermenter 112 by the temperature sensor 16. The control module 280 may determine a degree of fermentation of the beverage by using the detected pressure or temperature.

Also, the controller 284 may detect a temperature of water supplied from the water supply module 5 to the first main channel 41 by using the water supply temperature sensor 57. The controller 281A may control the water supply heater 53 according to the detected temperature of the water.

Also, the controller 284 may control the temperature controller 11 to maintain the temperature of the fermenter 112 to an adequate temperature.

Also, the controller 284 may accumulate at least one of a time taken to open the dispenser 62, a time taken to drive the air supply pump 151, a time taken to turn on the main valve 40 after the beverage is completely made. The controller 284 may calculate the amount of dispensed beverage that is dispensed from the fermentation container 12 according to the accumulated time. The controller 284 may calculate the amount of residual beverage from the calculated amount of dispensed beverage. The controller 284 may determine whether the beverage within the fermentation container 12 is completely dispensed from the information of the calculated amount of residual beverage. The controller 284 may determine that the beverage is completely dispensed when it is determined that the beverage within the fermentation container 12 is completely dispensed.

In addition, the controller 284 may control an overall operation of the beverage maker.

The beverage maker may further include a condenser case 130.

The condenser case 130 may be disposed on the base 100 and may accommodate the condenser 132.

The condenser case 130 may be disposed to be faced in an oblique direction with respect to the front and rear direction or the left and right direction. The compressor 131, the blower fan 135, and the condenser 132 may be disposed in a straight line, and the condenser case 130 may be lengthily disposed in a direction parallel to the straight line.

The blower fan 135 may be disposed between the compressor 131 and the condenser 132. The blower fan 135 may blow air into the condenser case 130. The air suctioned from a suction port 251 defined in the base 100 may be blown into the condenser case 130 by the blower fan 135 and then may be discharged to a discharge port defined in the rear cover 220 after being heat-exchanged with the condenser 132.

The blower fan 135 may be coupled to the condenser case 130.

Since the air blown by the blower fan 135 by the condenser case 130 passes through the condenser 132 completely, heat-exchange efficiency of the condenser 132 may be improved. Also, the condenser case 130 may prevent heat of the condenser 132 from be spread therearound.

Also, the blower fan 135 may be disposed between the compressor 131 and the condenser 132. Thus, the air blown by the blower fan 135 may dissipate the compressor 131.

An extension portion 130A extending in a longitudinal direction of the condenser case 130 to guide the air passing through the condenser 132 to the discharge port 271 of the rear cover 220 may be disposed on a top surface of the condenser case 130. The extension portion 130A may serve as an air guide.

Also, a reinforcing rib extending to the top surface of the extension portion 130A may be disposed on the top surface of the condenser case 130.

A condensed water accommodation portion 104 may be provided in the base 100. The condensed water accommodation portion 104 may be a space in which a gas is discharged from the gas discharge valve 73, and condensed water generated therein is accommodated.

In the process of discharging a gas from the gas discharge valve 73 mounted on the main frame 230,the gas may meet external cold air to generate the condensed water, and the condensed water may drop into the condensed water accommodation portion 104 so as to be collected into the condensed water accommodation portion 104.

The condensed water accommodation portion 104 may be disposed behind the fermentation module support portion 109.

Also, a protrusion portion 106 protruding upward from the top surface of the base 100 to prevent the condensed water from flowing to the outside of the condensed water accommodation portion 104 may be disposed on the base 100.

The condensed water accommodation portion 104 may communicate with a space defined between the fermentation module 1 and the fermentation module support portion 109. In more detail, a communication groove 105 allowing the condensed water accommodation portion 104 to communicate with the space may be defined in the base 100.

The condensed water accommodated in the condensed water accommodation portion 104 may flow into the space between the fermentation module 1 and the fermentation module support portion 109 so that more condensed water is accommodated.

The condensed water accommodation portion 104 and the condensed water accommodated in the auxiliary space may be naturally evaporated.

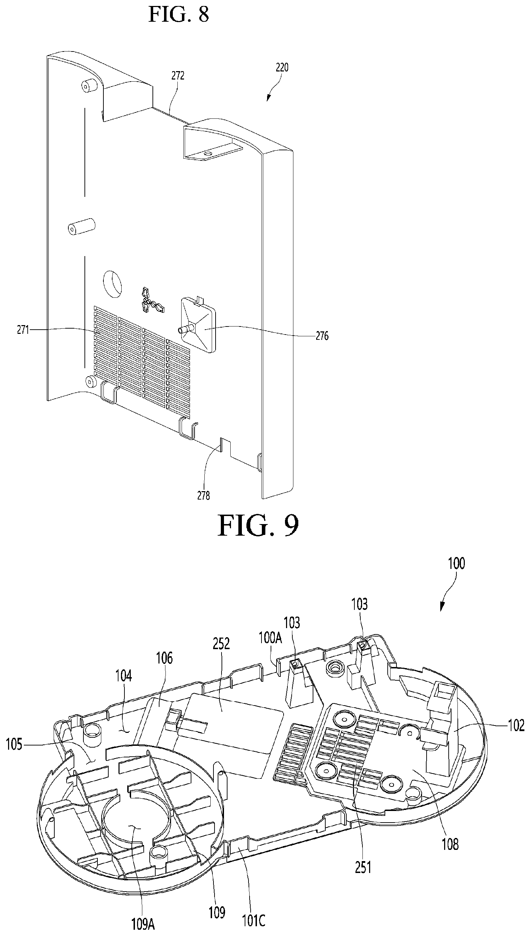

Fig. 7 is a rear view of the rear cover according to an embodiment, and Fig. 8 is a perspective view illustrating the rear cover of Fig. 7.

The rear cover 220 may be disposed behind the fermentation module 1, and a plurality of discharge ports 271 may be provided in the rear cover 220.. The condenser case 130 (see Fig. 6) may be disposed to face the discharge ports 271 of the rear cover 220. The air blown into the condenser case 130 by the blower fan 135 may be heat-exchanged with the condenser 132 and be discharged through the discharge port 271.

The plurality of discharge ports 271 defined in the rear cover 220 may be disposed at a position closer to the other end than one end of the rear cover 220. The discharge port 271 may be disposed at a position closer to a right end than a left end of the rear cover 220.

Referring to Figs. 6 and 7, the plurality of discharge ports 271 may overlap the blower fan 135 in the longitudinal direction of the condenser case 130. The condenser case 130 may be lengthily disposed in an oblique direction to face the discharge port 271.

Therefore, the air discharged to the outside of the beverage maker may be prevented from being introduced into the beverage maker through the opened discharge ports 271 to improve the heat dissipation efficiency.

A through-groove 278 through which a power cord (for example, an electric wire) for supplying power to the beverage maker passes may be defined in the rear cover 220.

A power cord fixing portion 273 on which the power cord is wound and a plug hole 274 into which a plug connected to an end of the power cord is inserted may be provided in/on the rear cover 220.

The power cord fixing portion 273 may be provided on the rear surface of the rear cover 220 and may be provided in a pair at left and right sides.

The plug hole 274 may be defined between both power cord fixing portions 273.

The power cords may be alternately wound and fixed to both power cord fixing portions 273, and plugs connected to the power cords may be inserted into the plug holes 274. As a result, the power cord and the plug may be arranged by the power cord fixing portion 273 and the plug hole 274 when the beverage maker is not in use, and also, discomfort when transporting the product may be solved.

An avoidance portion 272 that prevents an interference with the ingredient supplier 3 may be provided in an upper end of the rear cover 220. The avoidance portion 272 may be formed by cutting a portion of the upper end of the rear cover 220. The rear end of the ingredient supplier 3 may be disposed in the avoidance portion 272, and the beverage maker may be compact when compared to the case in which the avoidance portion 272 is provided.

An air filter mounting portion 276 on which the air filter 150 (see Fig. 1) is mounted may be disposed on the rear cover 220. The air filter 150 may filter air suctioned into each suction portion of the air injection pump 82 and the air supply pump 151.

The air filter mounting portion 276 may be recessed backward from the rear cover 220. A channel connection portion may be disposed on the air filter mounting portion 276, and the air suction channel 152 may be connected to the channel connection portion.

The filter mounting portion cover 275 may be detachably provided on the air filter mounting portion 276. The filter mounting portion cover 275 may cover the air filter mounting portion 276 at the rear side of the rear cover 220. The filter mounting portion cover 275 may have a plurality of through-holes through which air passes. The user may easily replace the air filter 150 by removing the filter mounting portion cover 275 from the air filter mount 276.

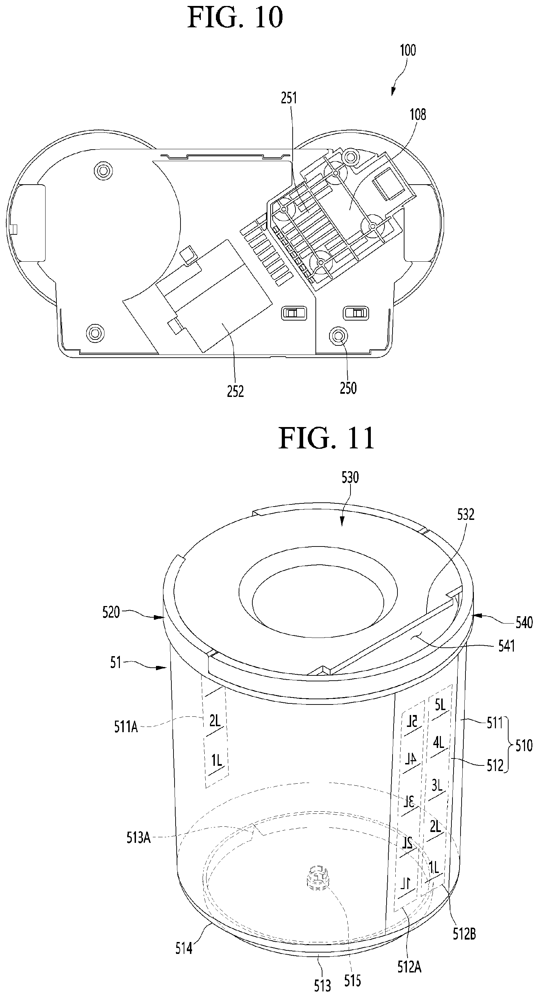

Fig. 9 is a perspective view of the base according to an embodiment, and Fig. 10 is a bottom view illustrating the base of Fig. 9.

The base 100 may include a fermentation module support portion 109, a condensed water accommodation portion 104, a compressor support portion 108, and a condenser case support portion 252.

The fermentation module support portion 109 may support the fermentation module 1. The fermentation module support portion 109 may be disposed at a position closer to the front end than the rear end of the base 100.

When the fermentation module 1 is placed on the fermentation module support portion 109, a space 109A may be defined between the fermentation module 1 and the fermentation module support portion 109. In more detail, the fermentation module support portion 109 may include a plurality of support frames protruding upward. The fermentation module 1 may be supported to contact the support frame, and an auxiliary space 109A may be defined between the bottom surface of the fermentation module 1 and the fermentation module support portion 109.

The condensed water accommodation portion 104 may accommodate the condensed water generated by gas or air discharged from the fermentation module 1. The condensed water accommodation portion 104 may be disposed behind the fermentation module support portion 109.

A communication groove 105 allowing the condensed water accommodation portion 104 to communicate with the fermentation module support portion 109 may be defined in the base 100. The condensed water of the condensed water accommodation portion 104 may flow into the auxiliary space 109A defined in the fermentation module support portion 109 by the communication groove 105, and also, more condensed water may be accommodated and be widely spread so that an evaporation rate of the condensed water may increase.

Also, the protrusion portion 106 the prevents the condensed water from flowing to the outside of the condensed water accommodation portion 104 may be disposed on the base 100.

The protrusion portion 106 may protrude upward from the top surface of the base 100. The protrusion portion 106 may be disposed between the condensed water accommodation portion 104 and the condenser case support portion 252. The protrusion portion 106 may prevent the condensed water of the condensed water accommodation portion 104 from flowing outside the auxiliary space 109A.

The compressor support portion 108 may support the compressor 131 of the refrigeration cycle device 13. The compressor support portion 108 may be disposed at a position at which the compressor 131 is disposed under the water tank case 149.

The condenser case support portion 252 may support the condenser case 130.

The condenser case support portion 252 may be disposed so that the condenser case 130 is disposed obliquely. The condenser case support portion 252 may be disposed at a position closer to the rear end than the front end of the base 100.

A suction port 251 through which air is suctioned may be provided in the base 100. The suction port 251 may be a plurality of holes that are penetrated vertically. The air suctioned through the suction port 251 may be blown to the condenser 132 within the condenser case 130 by the blower fan 135.

At least a portion of the suction port 251 may be disposed between the condenser case support portion 252 and the compressor support portion 108.

A residual water tray coupling portion 101C to which the residual water tray 101 (see Fig. 2) is coupled may be disposed on the front end of the base 100.

Also, a support body 102 supporting the water tank case 149 may be disposed on the base 100. The support body 102 may protrude upward from the base 100, and more specifically, may protrude upward from the top surface of the compressor support portion 108.

The support body 102 may be connected to the first support portion 511 disposed on the water tank case 149 to support one side of the water tank 51.

The support body 102 may allow the inner bottom surface of the water tank case 149 to be spaced apart from the compressor support portion 108 to provide a length so that the compressor 131, the water supply pump 52, the air injection pump 82, and the air supply pump 151 are disposed therebetween.

Also, the control module coupling portion 103 that is coupled to the control module 280 (see Fig. 5) may be disposed in the base 100. The control module coupling portion 103 may protrude upward from the base 100. The control module coupling portion 103 may be provided in plurality and may be disposed behind the compressor support portion 108.

A height of the control module coupling portion 103 may be less than that of the support body 102.

A through-groove 100A through which a power cord (for example, an electric wire) for supplying power to the beverage maker passes may be defined in the base 100. The through-groove 100A may be defined in the rear end of the base 100. The through-groove 100A defined in the base 100 may be defined under the through-groove 278 (see Fig. 7) defined in the rear cover 220. The through-groove 100A defined in the base 100 and the through-groove 278 defined in the rear cover 220 may together form a power cord through-hole.

A plurality of legs 250 protruding downward may be provided on the base 100. For example, four legs 250 may be provided on the base 100.

Each of the legs 250 may have a length at which the base 100 is maintained horizontally. The bottom surface of the base 100 may be spaced vertically from an installation surface, on which the beverage maker is installed, by the legs 250. Thus, external air may flow between the base 100 and the installation surface and be easily suctioned into the suction port 251.

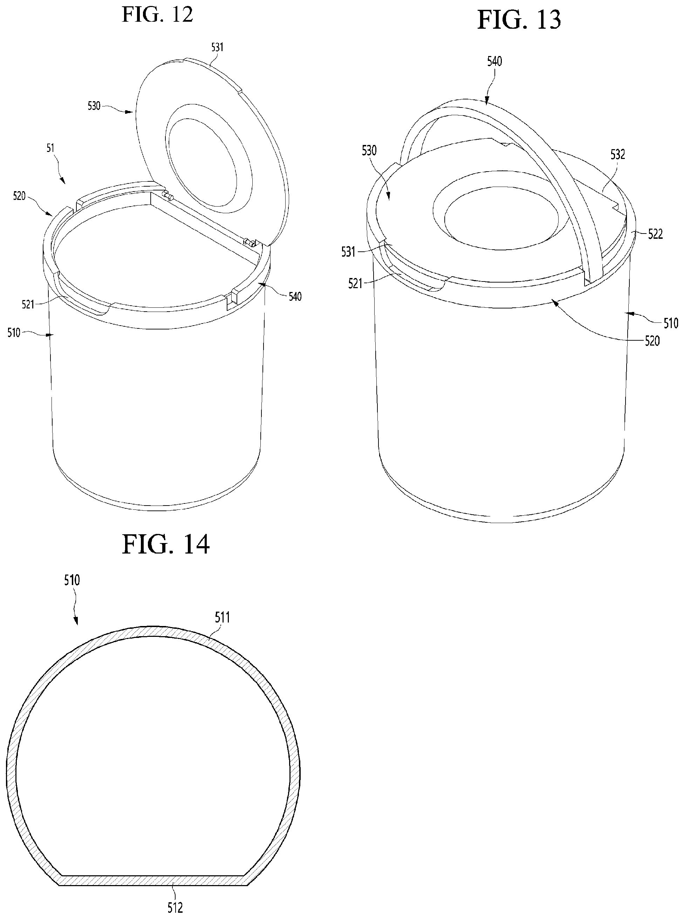

Fig. 11 is a perspective view of the water tank and the water tank lid according to an embodiment, Fig. 12 is a view illustrating a state in which the water tank lid is opened according to an embodiment, Fig. 13 is a view illustrating a state in which the water tank handle rotates upward according to an embodiment, and Fig. 14 is a cross-sectional view illustrating the main body of the water tank, taken in a horizontal direction according to an embodiment.

The water tank 51 may store a certain amount of water and be opened and closed by the water tank lid 530.

The water tank 51 may include a main body 510 having an opened top surface and a lid seating body 520 which is fused to an upper end of the main body 510 and on which the water tank lid 530 is seated. The water tank 51 may further include a handle 540 rotatably connected to the lid seating body 520.

The main body 510 may have a hollow cylindrical shape with an opened top surface. The main body 510 may be made of a transparent or translucent material. Therefore, the water contained in the main body 510 may be seen from the outside.

The main body 510 may include a curved portion 511 and a flat portion 512.

The curved portion 511 may define a portion of an outer circumference of the water tank 51. The curved portion 511 may be provided to be round. The curved portion 511 may have a constant curvature, but is not limited thereto.

The flat portion 512 may define the other portion of the outer circumference of the water tank 51. In more detail, the flat portion 512 may define a rear surface of the water tank 51.

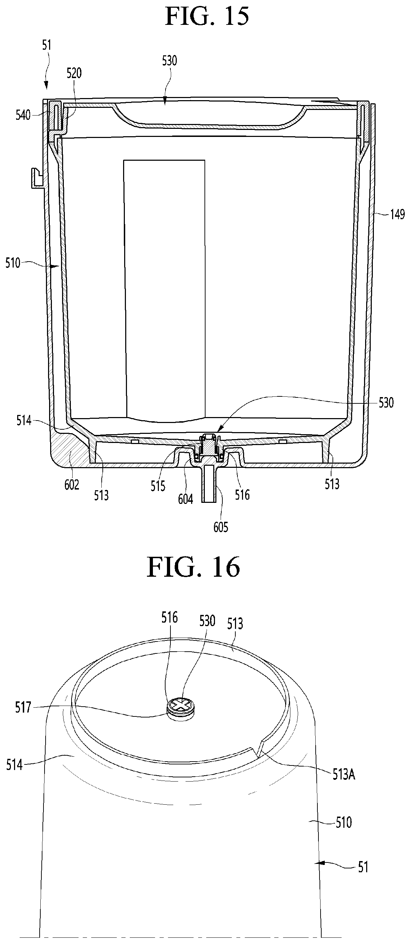

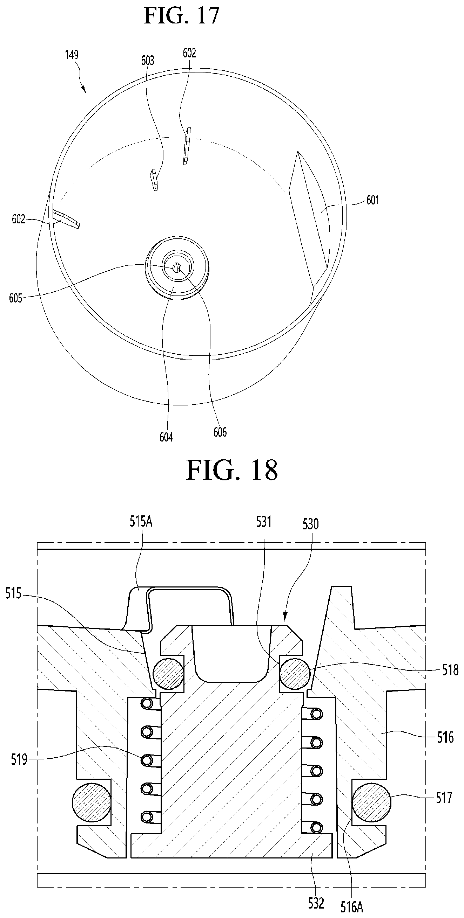

The flat portion 512 is flat. Since the main body 510 includes the flat portion 512, the water tank 51 may be accommodated with directivity within the water tank case 149 (see Fig. 15). In more detail, a mounting guide 601 (see Fig. 17) contacting the flat portion 512 may be provided on the water tank case 149. The mounting guide 601 may be provided on an inner circumference of the water tank case 149. Thus, the water tank 51 may be mounted on the water tank case 149 in only a set direction, and the water tank 51 may be fixed so as not to rotate within the water tank case 149.

A water level scale may be displayed on the main body 510. For example, a first water level scale 511A may be displayed on the curved portion 511, and a second water level scale 512A and a third water level scale 512B may be displayed on the flat portion 512.

The first water level scale 511A may be displayed on an outer surface of the curved portion 511 of the water tank 51. The first water level scale 511A may be directed forward when viewed from the front side. Thus, the user may easily check an amount of water contained in the water tank 51 by looking at the first water level scale 511A in a state in which the water tank 51 is separated from the water tank case 149.

The second water level scale 512A may be displayed on a rear surface of the water tank 51, that is, on the outer surface of the flat portion 512. The second water level scale 512A may be directed forward when viewed from the front side. That is, the second water level scale 512A may be seen upside down when viewed from the rear side.

The user may see the second water level scale 512A from the front side through the transparent or translucent curved portion 511 while the water tank 51 is accommodated in the water tank case 149, and also the user may easily check an amount of water contained in the water tank 51 by seeing the second water level scale 512A.

In order to allow visibility of the second water level scale 511A to increase in a state in which the water tank 51 is accommodated in the water tank case 149, a color of the second water level scale 511A may be contrasted with a color of the inner circumference of the water tank case 149. The inner circumference of the water tank case 149 may have a black color, and the second water level scale 511A may have a white color.

The third water level scale 512B may be displayed on the rear surface of the water tank 51, that is, on the outer surface of the flat portion 512. The third water level scale 512B may be displayed in parallel with the second water level scale 512A.

The third water level scale 512B may be directed forward when viewed from the rear side. That is, the third water level scale 512B may be symmetrical with the second water level scale 512A. The user may easily check an amount of water contained in the water tank 51 by seeing the third water level scale 512B in a state in which the water tank 51 is separated from the water tank case 149.

A lower rib 513 protruding downward from the bottom surface of the water tank 51 is disposed on the water tank 51. In more detail, the lower rib 513 protrudes downward from the bottom surface of the main body 510.

The lower rib 513 may be lengthily disposed in the circumferential direction of the water tank 51. That is, the lower rib 513 may have a ring or arc shape.

The water tank 51 may include an inclined portion 514 that connects the outer circumference of the water tank 51 to the lower rib 513 and has a diameter that gradually decreases toward the lower side. In more detail, the inclined portion 514 may connect a lower end of each of the curved portion 511 and the flat portion 512 to an upper end of the lower rib 513.

The inclined portion 514 may be disposed to be inclined in a direction in which a height thereof decreases toward the inside.

Since the inclined portion 514 has a diameter that gradually decreases toward the lower side, the diameter of the lower rib 513 may be less than that of the outer circumference of the water tank 51. The diameter of the outer circumference of the water tank 51 may mean a diameter of the curved portion 511.

The lower rib 513 is guided by a guide rib 602 disposed on the water tank case 149 (see Fig. 15). In more detail, when the user puts the water tank 51 into the water tank case 149, a lower end of the lower rib 513 may be slid down along the inclined upper end of the guide rib 602, and the lower rib 513 may move to the inside of the guide rib 602. Thus, the water tank 51 may be mounted in place in the water tank case 149.

When the lower rib 513 moves inside the guide rib 602, the inclined portion 514 of the water tank 51 may be disposed above the guide rib 602. That is, the guide rib 602 and the water tank 51 may not interfere with the inclined portion 514.

At least one hook groove 513A is defined in the lower rib 513. The hook groove 513A may be cut out in the lower rib 513. Both ends of the hook groove 513A are disposed to be inclined in a direction in which both the ends are close to each other toward the upper side.

The hook groove 513A is hooked with a protrusion piece 603 disposed on the water tank case 149 (see Fig. 17). In more detail, when the user put the water tank 51 into the water tank case 149, the protrusion piece 603 may be inserted into the hook groove 513A. That is, the protrusion piece 603 may be hooked with the hook groove 513A in the horizontal direction. Thus, the water tank 51 may be mounted in place in the water tank case 149 and be fixed so as not to rotate within the water tank case 149.

A water discharge hole 51 may be defined in the bottom surface of the water tank 51 to discharge water. The water discharge hole 515 may communicate with the water tank discharge channel 55A (see Fig. 1).

The lid seating body 520 may be connected to an upper end of the main body 510. The lid seating body 520 may have a ring shape corresponding to the upper end of the main body 510.

The water tank lid 530 may be seated on the lid seating body 520. The water tank lid 530 may cover the open top surface of the water tank 51 to seal the water tank.

The connection portion 532 of the water tank lid 530 may be hinge-coupled to the lid seating body 520. The connection portion 532 may be lengthily disposed in the left and right direction. The connection portion 532 may be connected to a rear portion of the lid seating body 520. A portion of the lid seating body 520, which is disposed behind the connection portion 532, may be blocked, and a portion disposed ahead of the connection portion 532 may be opened. Thus, the water tank lid 530 may rotate around the connection portion 532 to open and close the water tank 51.

A grip portion 531 may be disposed on the water tank lid 530, and a grip groove 521 disposed below the grip portion 531 may be defined in the lid seating body 520.

The grip portion 531 may be expanded or protrude around the water tank lid 530. The grip groove 521 may be recessed from the top surface of the lid seating body 520. The grip groove 521 may be stepped with the top surface of the lid seating body 520. The grip portion 531 may be defined in the front portion of the water tank lid 531, and the grip groove 521 may be defined in the front portion of the lid seating body 520.

The grip portion 531 may cover an opened upper end of the grip groove 521. The user may grip the grip portion 531 by inserting a finger into the grip groove 521 or push upward. Thus, the user may easily open the water tank lid 530.

The handle 540 may be rotatably connected to the lid seating body 520. The user may easily carry the water tank 51 by holding the handle 540 or easily take the water tank 51 out of the water tank case 149.

The handle 540 may have an approximately arc shape. The handle 540 may be disposed outside the water tank lid 530. The handle 540 may be disposed to surround a portion of the outer circumference of the water tank lid 530.

A radius of curvature of the handle 540 may be the same or similar to a radius of curvature of the lid seating body 520. Thus, the handle 540 may be seated integrally on the lid seating body 520.

The connection portion 532 of the water tank lid 530 may be disposed inside the handle 540. A rotation axis of the handle 540 may be disposed in front of the connection portion 532 of the water tank lid 530. The handle 540 may rotate toward the upper side of the water tank lid 530.

A handle seating portion 522 on which the handle 540 is seated may be disposed on the lid seating body 520. The handle seating portion 522 may be stepped downward with respect to the top surface of the lid seating body 520. An upper end of the handle 540 seated on the handle seating portion 522 may be disposed on a top surface and a horizontal surface of the lid seating body 520.

The rotation direction of the handle 540 and the water tank lid 530 may be opposite to each other. For example, the handle 540 may rotate forward to be separated from the handle seating portion 522 and also rotate backward to be seated on the handle seating portion 522. On the other hand, the tank lid 530 may rotate backward to be opened and rotate forward to be closed.

A spaced space 541 may be defined between the connection portion 532 of the water tank lid 530 and the handle 540. The spaced space 541 may be defined to be stepped downward with respect to the top surface of the tank lid 530 and a top surface of the handle 540, and a bottom surface of the spaced space 541 may be blocked.

The user may allow the handle 541 to rotate upward by putting the finger into the spaced space 541. The user may allow the handle 541 to easily rotate upward in a state in which the water tank 51 is accommodated in the water tank case 149 and also may hold the handle 541 that rotates upward to take the water tank 51 out of the water tank case 149.

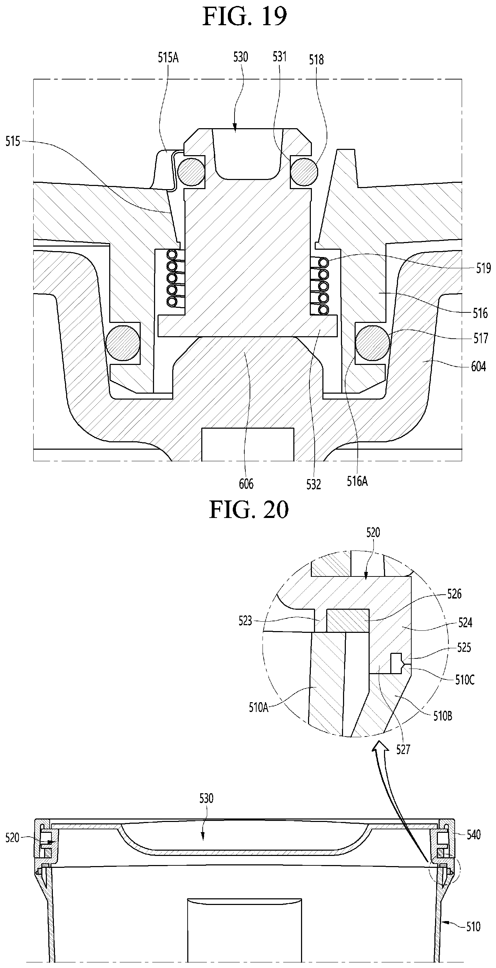

Fig. 15 is a cross-sectional view illustrating the inside of the water tank and the water tank case according to an embodiment, Fig. 16 is a view illustrating the bottom surface of the water tank according to an embodiment, Fig. 17 is a view illustrating the inside of the water tank case when viewed from the upper side according to an embodiment, Fig. 18 is a view for explaining an operation of a water leakage prevention valve according to an embodiment, and Fig. 19 is a view illustrating a state in which the water leakage prevention valve is opened according to an embodiment.

The water tank 51 is separably accommodated in the water tank case 149. The user may insert the water tank 51 from the upper side of the water tank case 149 into the water tank case 149.

The water tank case 149 is provided with a configuration for mounting the water tank 51 in place. For example, the water tank case 149 may be provided with a mounting guide 601, and is provided with a guide rib 602 and a protrusion piece 603.

The mounting guide 601 may be provided on an inner circumference of the water tank case 149. The mounting guide 601 may contact the flat portion 512 of the water tank 51. The mounting guide 601 may be disposed behind the water tank 51. The mounting guide 601 may guide the water tank 51 to be mounted in the water tank case 149 only in a predetermined direction. Also, the water tank 51 may not rotate within the water tank case 149 by the mounting guide 601.

The guide rib 603 protrudes upward from the bottom surface of the water tank case 149. The guide rib 603 may be connected to the inner circumference of the water tank case 149. An upper end of the guide rib 603 is disposed to be inclined in a direction in which the height thereof gradually decreases toward the inside. So, the guide rib 603 may be inclined to the center of the water tank case 149.

As described above, the lower rib 513 of the water tank 51 may move down along the upper end of the guide rib 602 and then move inside the guide rib 602. Thus, the guide rib 603 is disposed outside the lower rib 513 of the water tank 51 and may be disposed below the inclined portion 514.

A plurality of guide ribs 602 may be provided. The plurality of guide ribs 602 may be spaced apart from each other in the circumferential direction of the water tank case direction 149 or the lower rib 513.

Also, the protrusion piece 603 protruding upward from the bottom surface of the water tank case 149 is disposed on the water tank case 149. The protrusion piece 603 is hooked with the hook groove 513A defined in the lower rib 513 of the water tank 51. Since both ends of the hook groove 513A are disposed to be inclined in a direction in which both the ends are close to each other toward the upper side, the protrusion piece 603 may be guided by both the ends of the hook groove 513A and then be inserted up to the end of the hook groove 513A.

The protrusion piece 603 is disposed inside the guide rib 602. In a state in which the lower rib 513 of the water tank 51 is disposed inside the guide rib 602, the protrusion piece 603 is hooked with the hook groove 513A of the lower rib 513.

The water tank 51 may be provided with the water leakage prevention valve 530 that blocks the water discharge hole 515. In more detail, a hollow portion 516 protruding downward from the bottom surface of the water tank 51 and communicating with the water discharge hole 515 may be defined in the water tank 51, and the water leakage prevention valve 530 may be mounted within the hollow portion 516. The hollow portion 516 may be disposed inside the lower lid 513.

The leakage prevention valve 530 may have a cylindrical shape that is lengthily disposed vertically.

The water leakage prevention valve 530 may be mounted on the hollow portion 516 so as to be elevatable. When the water tank 51 is mounted on the water tank case 149, the water leakage prevention valve 530 may be pressed upward by a pressing protrusion 606 to be described later, and the water discharge hole 515 may be opened. On the other hand, when the water tank 51 is separated from the water tank case 149, the water leakage prevention valve 530 may descend by elastic force of an elastic member 519 to be described later, and the water discharge hole 515 may be blocked.

An insertion portion 605 into which the hollow portion 516 is inserted may be defined in the bottom surface of the water tank case 149. The insertion portion 604 may protrude upward from the inner bottom surface of the water tank case 149. The insertion portion 604 may have an approximately annular shape.

An outlet 605 communicating with the inside of the insertion portion 604 and connected to the water tank discharge channel 55A (see Fig. 1) may be disposed in the water tank case 149. The outlet 605 may have a hollow shape that communicates with the inside of the insertion portion 604 and protrudes to a lower side of the water tank case 149.

The pressing protrusion 606 pressing the water leakage prevention valve 530 of the water tank 51 upward may be disposed inside the insertion part 149. The pressing protrusion 606 may be disposed above the outlet 605 and be connected to the outlet 605. The pressing protrusion 606 may have a size that does not block the outlet 605.

When the water tank 51 is mounted on the water tank case 149, the pressing protrusion 606 may press the water leakage prevention valve 530 of the water tank 51 upward, and the water discharge hole 51 of the water tank 51 may be opened so that the water of the water tank 51 flows to the water tank discharge channel 55A (see Fig. 1).

A valve guide rib 515A for guiding the elevation of the water leakage prevention valve 530 may be disposed on the water tank 51. The valve guide rib 515A may protrude upward from the bottom surface of the water tank 51. The valve guide rib 515A may be connected to the upper end of the water discharge hole 515. A plurality of valve guide ribs 515A spaced apart from each other in the circumferential direction of the outlet port 515 may be provided. However, this embodiment is not limited thereto. For example, the valve guide rib 515A may have a single ring shape surrounding the upper side of the water discharge hole 515.

The inside of the hollow portion 516 of the water tank 51 may be provided with the elastic member 519 that presses the water leakage prevention valve 530 downward. The elastic member 519 may be a coil spring that is biased to apply elastic force downward and disposed to surround the periphery of the water leakage prevention valve 530.

An expansion portion 532 pressed by the elastic member 519 may be disposed on the water leakage prevention valve 530. The expansion portion 532 may be expanded in a radially outward direction from the periphery of the water leakage prevention valve 530. The expansion portion 532 may be disposed around the lower end of the water leakage prevention valve 530. The elastic member 519 may be compressed/tensioned between the periphery of the lower end of the water discharge hole 515 and the extension portion 532.

The water leakage prevention valve 530 may be provided with an inner O-ring 518 that blocks between an outer circumference of the water leakage prevention valve 530 and an inner circumference of the water discharge hole 515. That is, an O-ring fitting groove 518 in which the inner O-ring 518 is mounted may be defined in the water leakage prevention valve 530. The O-ring fitting groove 531 may be defined in an upper outer circumference of the water leakage prevention valve 530 and be lengthily defined in the circumferential direction of the water leakage prevention valve 530.

An inner diameter of the water discharge hole 515 of the water tank 51 may gradually decrease downward. When the water leakage prevention valve 530 descends due to the elastic force of the elastic member 519, the inner O-ring 518 may contact the inner circumference of the water discharge hole 515 to block the water discharge hole 515. The water leakage prevention valve 530 may prevent the water of the water tank 51 from leaking to the water discharge hole 515.

When the water tank 51 is mounted in place in the water tank case 149, the hollow portion 516 may be inserted into the insertion portion 604, and the pressing protrusion 606 may be inserted into the hollow portion 516 to press the water leakage prevention valve 530 upward.

When the water leakage prevention valve 530 ascends by the pressing protrusion 606, the inner O-ring 518 may be spaced apart from the inner circumference of the water discharge hole 515. The water of the water tank 51 may flow between the inner circumference of the water discharge hole 515 and the inner O-ring 518 by gravity to flow into the hollow portion 516. The water flowing into the hollow portion 516 may pass between the inner circumference of the hollow portion 516 and the outer circumference of the water leakage prevention valve 530 to flow into the insertion portion 604 of the water tank case 149. The water flowing into the insertion portion 604 of the water tank case 149 may pass through the outlet 605 to flow to the water tank discharge channel 55A (see Fig. 1).

The hollow portion 516 may be provided with an outer O-ring 517 that blocks between the outer circumference of the hollow portion 516 and the inner circumference of the insertion portion 604. The hollow portion 516 may have an O-ring fitting groove 516A in which the outer O-ring 517 is mounted. The O-ring fitting groove 516A may be defined in the lower outer circumference of the hollow portion 516 and may be lengthily defined in the circumferential direction of the hollow portion 516.

The outer O-ring 517 may prevent the water passing through the hollow portion 516 from leaking between the hollow portion 516 and the insertion portion 604.

Fig. 20 is a view for explaining a coupling relationship between the water tank body and the lid seating body according to an embodiment.

A packing 526 may be mounted on the lid seating body 520. The packing 526 may be mounted under the lid seating body 520. The packing 526 may have a ring shape corresponding to the lid seating body 520.

In more detail, the first upper rib 523 and the second upper rib 524 may be disposed on the lid seating body 520.

The first upper rib 523 and the second upper rib 524 may protrude downward from the lid seating body 520. Each of the first upper rib 523 and the second upper rib 524 may have an annular shape that is lengthily defined in the circumferential direction of the lid seating body 520.

An outer surface of the second upper rib 524 may be continuously connected to the outer circumference of the lid seating body 520 without being stepped.

The second upper rib 524 may be spaced apart from the first upper rib 523 in a radially outward direction, and the packing 526 may be fitted between the second upper rib 524 and the first upper rib 523.

The lid seating body 520 may be fused to the top end of the main body 510. The packing 526 may prevent the water from leaking between the main body 510 and the lid seating body 520, which are fused to each other.

The lid seating body 520 may be fused to the top end of the main body 510 in a state in which the packing 526 is mounted. Thus, the packing 526 may be disposed between the lid seating body 520 and the main body 510 and may not be visible from the outside.

In more detail, the main body 510 may include a first lower rib 510A and a second lower rib 510B.

The first lower rib 510A and the second lower rib 510B may be disposed on the upper end of the main body 510. The second lower rib 510B may be spaced apart from the first lower rib 510A in a radially outward direction.

The first lower rib 510A may contact the first upper rib 523. In more detail, the upper end of the first lower rib 510A may contact a lower end of the first upper rib 523. In this case, the packing 526 may contact the first lower rib 510A to close a gap between the first lower rib 510A and the first upper rib 523. Therefore, the water inside the water tank 51 may be prevented from being introduced between the first lower rib 510A and the first upper rib 523.

The second lower rib 510B may be fused to the second upper rib 524. In more detail, a fused portion 527 that is fused with the second lower rib 510B may be disposed on the second upper rib 524. The fused portion 527 may protrude downward from an inner end of the second upper rib 524. The fused portion 527 may have a ring shape like the second upper rib 524.

A fused mountain may be disposed on the second upper rib 524 before the lid seating body 520 is fused to the main body 510. In a process in which the lid seating body 520 is fused with the main body 510, the fused mountain may be melted to form the fused portion 524. Thus, the second lower rib 510B and the second upper rib 524 may be fused to each other.

An upper protrusion 525 may be disposed on the second upper rib 524, and a lower protrusion 510C that contacts the upper protrusion 525 may be disposed on the second lower rib 510B.

The upper protrusion 525 may protrude downward from the second upper rib 524. An outer surface of the upper protrusion 525 may be continuously connected to an outer circumference of the second upper rib 524.

The lower protrusion 510C may protrude upward from the second lower rib 510B. An outer surface of the lower protrusion 510C may be continuously connected to an outer circumference of the second lower rib 510B.

The upper protrusion 525 may be disposed above the lower protrusion 510C, and a lower end of the upper protrusion 525 may contact an upper end of the lower protrusion 510C.

The upper protrusion 525 and the lower protrusion 510C may cover the fused portion 527 from the outside. The upper protrusion 525 and the lower protrusion 510C may prevent the melted fused mountain from being separated to the outside of the water tank 51 in the process of forming the fused portion 527.

According to the embodiment, the lower end of the lower rib may be slid along the upper end of the guide rib, and the lower rib may be guided to the inside of the guide rib. Therefore, the water tank may be mounted in place on the water tank case.

In addition, the protrusion piece may be hooked with the hook groove so that the water tank is mounted in place on the water tank case, and the water tank may be fixed so as not to rotate inside the water tank case.

In addition, since both ends of the hook groove may be inclined in the direction, in which both the ends are close to each other, toward the upper side, the protrusion piece may be guided by both the ends of the hook groove and inserted up to the end of the hook groove.

In addition, since the hollow portion of the water tank is inserted into the insertion portion of the water tank case, the water in the water tank may flow through the hollow portion and the inside of the insertion portion to flow to the water tank discharge channel.

In addition, the water discharge hole may have the inner diameter that gradually decreases downward. As a result, the lower end of the lower rib may slid along the upper end of the guide rib, and the lower rib may be guided to the inside of the guide rib. may be elevated to easily open and close the water discharge hole.

In addition, the O-ring may be provided between the outer circumference of the hollow portion and the inner circumference of the insertion portion. Thus, the water may not leak between the outer circumference of the hollow portion and the inner circumference of the insertion portion.

In addition, since the water leakage prevention valve is normally pressed downward by the elastic member, the water may not leak from the water tank.

In addition, the pressing protrusion of the water tank case may press the water leakage prevention valve upward. Thus, when the water tank is mounted on the water tank case, the water discharge hole of the water tank may be opened.

In addition, the elevation of the water leakage prevention valve may be guided by the valve guide rib.

In addition, the O-ring may be provided between the outer circumference of the water leakage prevention valve and the inner circumference of the water discharge hole. Thus, the water leakage prevention valve may reliably close the water discharge hole.

In addition, the inclined portion of the water tank may have the diameter that gradually decreases downward and be disposed above the guide rib. Thus, the guide ribs may not interfere with the water tank, and the water tank may be mounted in place in the water tank case.

In addition, the mounting guide may contact the flat portion of the water tank in the water tank case. Thus, the water tank may be mounted on the water tank case with the directivity.

In addition, the water level scale that is directed in the forward direction when viewed from the front may be displayed on the outer surface of the flat portion. This allows the user to check the water level immediately without removing the water tank from the water tank case.

In addition, the color of the water level scale may be contrasted with the color of the inner circumference of the water tank case. Thus, the visibility of the water level scale may be improved.

In addition, the packing may be disposed between the main body and the lid seating body. Thus, the water may not leak between the main body and the lid seating body, and the water tank may be reliably sealed.

In addition, since the main body and the lid seating body are coupled to each other in the fusion manner, even if the size of the water tank is large, it may be easily coupled, and the coupling strength may be improved.

In addition, the handle may be disposed to surround a portion of the outer circumference of the tank lid, and the connection portion between the tank lid and the lid seating body may be disposed inside the handle. In addition, the rotation direction of the water tank lid and the handle may be reversed. Thus, the tank lid and the opening of the corresponding water tank may be provided to be sufficiently large, and thus, the user may easily clean the inside of the tank.

In addition, the upper protrusion and the lower protrusion may cover the fusion portion from the outside. As a result, in the process of fusing the main body and the lid seating body, the melted fused mountain may not leak out of the water tank, and the fused portion may not be visible from the outside.

The above-disclosed subject matter is to be considered illustrative, and not restrictive. Therefore, the scope of the present disclosure is defined by the appended claims.

## Claims

1. A beverage maker comprising:
a fermentation module (1);
a water tank (51) for storing water;
a water tank case (149) for separably accommodating the water tank (51); and
a lower rib (513) protruding downward from a bottom surface of the water tank (51);
**characterized in that** the beverage maker further comprises:
a guide rib (602) protruding upward from an inner bottom surface of the water tank case (149), the guide rib (602) being disposed outside the lower rib (513),
wherein an upper end of the guide rib (602) is inclined in a direction in which the guide rib (602) decreases in height toward the inside thereof;
wherein a protrusion piece (603) protrudes upward from the inner bottom surface of the water tank case (149), and the protrusion piece (603) is spaced apart from the guide rib (602);
wherein the lower rib (513) includes a hook groove (513A) for being hooked with the protrusion piece (603); and
both ends of the hook groove (513A) are inclined.

2. The beverage maker according to claim 1, further comprising:
a water discharge hole (515) defined in the bottom surface of the water tank (51);
a hollow portion (516) protruding downward from the bottom surface of the water tank (51) and disposed inside the lower rib (513), the hollow portion (516) is communicating with the water discharge hole (515);
an insertion portion (605) provided in the inner bottom surface of the water tank case (149) and into which the hollow portion (516) is inserted; and
a water tank water discharge channel (55A) communicating with the inside of the insertion portion (605) to discharge water within the water tank (51).

3. The beverage maker according to claim 2, further comprising:
a water leakage prevention valve (530) mounted inside the hollow portion (516);
an elastic member (519) configured to press the water leakage prevention valve (530) downward so as to allow the water leakage prevention valve (530) to block the water discharge hole (515); and
a pressing protrusion (606) disposed within the insertion portion (605), the pressing protrusion (606) being configured to press the water leakage prevention valve (530) upward so as to allow the water leakage prevention valve (530) to open the water discharge hole (515).

4. The beverage maker according to claim 3, further comprising a valve guide rib (515A) connected to an upper end of the water discharge hole (515), the valve guide rib (515A) being configured to guide elevation of the water leakage prevention valve (530).

5. The beverage maker according to any one of the preceding claims, wherein the water tank (51) comprises an inclined portion (514) configured to connect an outer circumference of the water tank (51) to the lower rib (513) and having a diameter that decreases downward, and
the guide rib (602) is facing the inclined portion (514), when the water tank (51) is inserted into the water tank case (149).

6. The beverage maker according to any one of the preceding claims, wherein the water tank (51) comprises:
a rounded curved portion (511) configured to define a portion of an outer circumference of the water tank (51); and
a flat portion (512) configured to define the other portion of the outer circumference of the water tank (51),
wherein the water tank case (149) includes a mounting guide (601) facing the flat portion (512) of the water tank (51) when the water tank (51) is inserted into the water tank case (149).

7. The beverage maker according to any one of the preceding claims, further comprising a water tank lid (530) configured to open and close the water tank (51) at an upper side of the water tank (51), wherein the water tank (51) comprises at least one of:
a main body (510) having an opened top surface;
a lid seating body (520) on an upper end of the main body (510) and which is provided for seating the water tank lid (530); and
a packing (526) disposed between the main body (510) and the lid seating body (520).

8. The beverage maker according to claim 7, wherein the water tank (51) further comprises a handle (540) rotatably connected to the lid seating body (520) and disposed to surround a portion of an outer circumference of the water tank lid (530).

9. The beverage maker according to claim 7 or 8, wherein the water tank lid (530) comprises a connection portion (532) that is hinge-coupled to the lid seating body (520), preferably the connection portion (532) is disposed inside the handle (540).

10. The beverage maker according to claim 9, wherein a spaced space (541) is defined between the connection portion (532) and the handle (540).

11. The beverage maker according to any one of the claims 7 - 10, wherein the lid seating body (520) is provided with:
a first upper rib (523) protruding downward from the lid seating body (520); and
a second upper rib (524) radially spaced outward from the first upper rib (523),
wherein the packing (526) is fitted between the first upper rib (523) and the second upper rib (524).

12. The beverage maker according to any one of the claims 7 - 11, wherein the main body (510) comprises at least one of:
a first lower rib (510A) contacting a lower end of the first upper rib (523); and
a second lower rib (510B) radially spaced outward from the first lower rib (510A).

13. The beverage maker according to claim 12, wherein the lid seating body (520) is provided with a fusion portion (527) protruding downward from an inner end of the second upper rib (524) and fused with the second lower rib (510B).

14. The beverage maker according to claim 13, wherein an upper protrusion (525) protrudes downward from the second upper rib (524),
a lower protrusion (510C) protrudes upward from the second lower rib (510B) to contact the upper protrusion (525), and
the upper protrusion (525) and the lower protrusion (510C) cover the fusion portion (527) at the outside.

## Patentansprüche

1. Getränkezubereitungsvorrichtung, die Folgendes umfasst:
ein Fermentationsmodul (1);
einen Wassertank (51) zum Speichern von Wasser;
ein Wassertankgehäuse (149), um den Wassertank (51) lösbar aufzunehmen; und
eine untere Rippe (513), die von einer Bodenfläche des Wassertanks (51) nach unten vorsteht;
**dadurch gekennzeichnet, dass** die Getränkezubereitungsvorrichtung ferner Folgendes umfasst:
eine Führungsrippe (602), die von einer inneren Bodenfläche des Wassertankgehäuses (149) nach oben vorsteht, wobei die Führungsrippe (602) außerhalb der unteren Rippe (513) angeordnet ist,
wobei ein oberes Ende der Führungsrippe (602) in einer Richtung, in der die Höhe der Führungsrippe (602) nach innen abnimmt, schräg verläuft;
wobei ein vorstehendes Teil (603) von der inneren Bodenfläche des Wassertankgehäuses (149) nach oben vorsteht und wobei das vorstehende Teil (603) von der Führungsrippe (602) beabstandet ist;
wobei die untere Rippe (513) eine Hakenrille (513A) zum Einhaken des vorstehenden Teils (603) umfasst; und
beide Enden der Hakenrille (513A) geneigt sind.

2. Getränkezubereitungsvorrichtung nach Anspruch 1, die ferner Folgendes umfasst:
ein Wasserausgabeloch (515), das in der Bodenfläche des Wassertanks (51) definiert ist;
einen hohlen Abschnitt (516), der von der Bodenfläche des Wassertanks (51) nach unten vorsteht und innerhalb der unteren Rippe (513) angeordnet ist, wobei der hohle Abschnitt (516) mit dem Wasserausgabeloch (515) kommuniziert;
einen Einsetzabschnitt (605), der in der inneren Bodenfläche des Wassertankgehäuses (149) bereitgestellt ist und in den der hohle Abschnitt (516) eingesetzt ist; und
einen Wassertank-Wasserausgabekanal (55A), der mit dem Inneren des Einsetzabschnitts (605) kommuniziert, um Wasser im Wassertank (51) auszugeben.

3. Getränkezubereitungsvorrichtung nach Anspruch 2, die ferner Folgendes umfasst:
ein Ventil (530) zum Verhindern des Auslaufens von Wasser, das im hohlen Abschnitt (516) montiert ist;
ein elastisches Element (519), das konfiguriert ist, das Ventil (530) zum Verhindern des Auslaufens von Wasser abwärts zu drücken, damit das Ventil (530) zum Verhindern des Auslaufens von Wasser das Wasserausgabeloch (515) blockieren kann; und
einen Pressvorsprung (606), der innerhalb des Einsetzabschnitts (605) angeordnet ist, wobei der Pressvorsprung (606) konfiguriert ist, das Ventil (530) zum Verhindern des Auslaufens von Wasser nach oben zu pressen, damit das Ventil (530) zum Verhindern des Auslaufens von Wasser das Wasserausgabeloch (515) öffnen kann.

4. Getränkezubereitungsvorrichtung nach Anspruch 3, die ferner eine Ventilführungsrippe (515A) umfasst, die mit einem oberen Ende des Wasserausgabelochs (515) verbunden ist, wobei die Ventilführungsrippe (515A) so konfiguriert ist, dass sie ein Anheben des Ventils (530) zum Verhindern des Auslaufens von Wasser führt.

5. Getränkezubereitungsvorrichtung nach einem der vorhergehenden Ansprüche, wobei der Wassertank (51) einen schräg verlaufenden Abschnitt (514) umfasst, der konfiguriert ist, einen Außenumfang des Wassertanks (51) mit der unteren Rippe (513) zu verbinden, und der einen Durchmesser hat, der nach unten hin abnimmt, und
die Führungsrippe (602) zum schräg verlaufenden Abschnitt (514) zeigt, wenn der Wassertank (51) in das Wassertankgehäuse (149) eingesetzt ist.

6. Getränkezubereitungsvorrichtung nach einem der vorhergehenden Ansprüche, wobei der Wassertank (51) Folgendes umfasst:
einen gerundeten gekrümmten Abschnitt (511), der konfiguriert ist, einen Abschnitt eines Außenumfangs des Wassertanks (51) zu definieren; und
einen flachen Abschnitt (512), der konfiguriert ist, den anderen Abschnitt des Außenumfangs des Wassertanks (51) zu definieren,
wobei das Wassertankgehäuse (149) eine Montageführung (601) umfasst, die zum flachen Abschnitt (512) des Wassertanks (51) zeigt, wenn der Wassertank (51) in das Wassertankgehäuse (149) eingesetzt ist.

7. Getränkezubereitungsvorrichtung nach einem der vorhergehenden Ansprüche, der ferner einen Wassertankdeckel (530) umfasst, der konfiguriert ist, den Wassertank (51) an einer Oberseite des Wassertanks (51) zu öffnen und zu schließen, wobei der Wassertank (51) wenigstens eines der folgenden Elemente umfasst:
einen Hauptkörper (510), der eine offene obere Oberfläche aufweist;
einen Deckelauflagekörper (520) an einem oberen Ende des Hauptkörpers (510), der dafür ausgelegt ist, dass der Wassertankdeckel (530) darauf aufliegt; und
eine Dichtung (526), die zwischen dem Hauptkörper (510) und dem Deckelauflagekörper (520) angeordnet ist.

8. Getränkezubereitungsvorrichtung nach Anspruch 7, wobei der Wassertank (51) ferner einen Griff (540) aufweist, der mit dem Deckelauflagekörper (520) drehbar verbunden ist und so angeordnet ist, dass er einen Abschnitt eines Außenumfangs des Wassertankdeckels (530) umgibt.

9. Getränkezubereitungsvorrichtung nach Anspruch 7 oder 8, wobei der Wassertankdeckel (530) einen Verbindungsabschnitt (532) umfasst, der mit dem Deckelauflagekörper (520) über ein Scharnier gekoppelt ist, wobei der Verbindungsabschnitt (532) vorzugsweise im Griff (540) angeordnet ist.

10. Getränkezubereitungsvorrichtung nach Anspruch 9, wobei ein freier Raum (541) zwischen dem Verbindungsabschnitt (532) und dem Griff (540) definiert ist.

11. Getränkezubereitungsvorrichtung nach einem der Ansprüche 7-10, wobei der Deckelauflagekörper (520) versehen ist mit
einer ersten oberen Rippe (523), die vom Deckelauflagekörper (520) nach unten vorsteht; und
einer zweiten oberen Rippe (524), die von der ersten oberen Rippe (523) radial auswärts beabstandet ist,
wobei die Dichtung (526) zwischen der ersten oberen Rippe (523) und der zweiten oberen Rippe (524) eingesetzt ist.

12. Getränkezubereitungsvorrichtung nach einem der Ansprüche 7-11, wobei der Hauptkörper (510) wenigstens eines der folgenden Elemente umfasst:
eine erste untere Rippe (510A), die mit einem unteren Ende der ersten oberen Rippe (523) in Kontakt ist; und
eine zweite untere Rippe (510B), die von der ersten unteren Rippe (510A) radial nach außen beabstandet ist.

13. Getränkezubereitungsvorrichtung nach Anspruch 12, wobei der Deckelauflagekörper (520) mit einem Verbindungsabschnitt (527) versehen ist, der von einem inneren Ende der zweiten oberen Rippe (524) nach unten vorsteht und mit der zweiten unteren Rippe (510B) verbunden ist.

14. Getränkezubereitungsvorrichtung nach Anspruch 13, wobei ein oberer Vorsprung (525) von der zweiten oberen Rippe (524) nach unten vorsteht,
ein unterer Vorsprung (510C) von der zweiten unteren Rippe (510B) nach oben vorsteht, so dass er mit dem oberen Vorsprung (525) in Kontakt ist, und
der obere Vorsprung (525) und der untere Vorsprung (510C) den Verbindungsabschnitt (527) an der Außenseite abdecken.

## Revendications

1. Dispositif de préparation de boisson comportant :
un module de fermentation (1) ;
un réservoir d'eau (51) destiné à stocker de l'eau ;
un boîtier de réservoir d'eau (149) destiné à recevoir le réservoir d'eau (51) de manière séparable ; et
une nervure inférieure (513) faisant saillie vers le bas à partir d'une surface de fond du réservoir d'eau (51) ;
**caractérisé en ce que** le dispositif de préparation de boisson comporte en outre :
une nervure de guidage (602) faisant saillie vers le haut à partir d'une surface de fond intérieure du boîtier de réservoir d'eau (149), la nervure de guidage (602) étant disposée à l'extérieur de la nervure inférieure (513),
dans lequel une extrémité supérieure de la nervure de guidage (602) est inclinée dans une direction dans laquelle la nervure de guidage (602) diminue en hauteur vers l'intérieur de celle-ci ;
dans lequel une pièce de saillie (603) fait saillie vers le haut à partir de la surface de fond intérieure du boîtier de réservoir d'eau (149), et la pièce de saillie (603) est espacée de la nervure de guidage (602) ;
dans lequel la nervure inférieure (513) inclut une rainure de crochet (513A) destinée à être accrochée à la pièce de saillie (603) ; et
les deux extrémités de la rainure de crochet (513A) sont inclinées.

2. Dispositif de préparation de boisson selon la revendication 1, comportant en outre :
un trou d'évacuation d'eau (515) défini dans la surface de fond du réservoir d'eau (51) ;
une partie creuse (516) faisant saillie vers le bas à partir de la surface de fond du réservoir d'eau (51) et disposée à l'intérieur de la nervure inférieure (513), la partie creuse (516) étant en communication avec le trou d'évacuation d'eau (515) ;
une partie d'insertion (605) agencée dans la surface de fond intérieure du boîtier de réservoir d'eau (149) et dans laquelle la partie creuse (516) est insérée ; et
un canal d'évacuation d'eau de réservoir d'eau (55A) en communication avec l'intérieur de la partie d'insertion (605) pour évacuer l'eau à l'intérieur du réservoir d'eau (51).

3. Dispositif de préparation de boisson selon la revendication 2, comportant en outre :
une soupape de prévention de fuite d'eau (530) montée à l'intérieur de la partie creuse (516) ;
un élément élastique (519) configuré pour presser la soupape de prévention de fuite d'eau (530) vers le bas de manière à permettre à la soupape de prévention de fuite d'eau (530) de bloquer le trou d'évacuation d'eau (515) ; et
une saillie de pression (606) disposée à l'intérieur de la partie d'insertion (605), la saillie de pression (606) étant configurée pour presser la soupape de prévention de fuite d'eau (530) vers le haut de manière à permettre à la soupape de prévention de fuite d'eau (530) d'ouvrir le trou d'évacuation d'eau (515).

4. Dispositif de préparation de boisson selon la revendication 3, comportant en outre une nervure de guidage de soupape (515A) reliée à une extrémité supérieure du trou d'évacuation d'eau (515), la nervure de guidage de soupape (515A) étant configurée pour guider une élévation de la soupape de prévention de fuite d'eau (530).

5. Dispositif de préparation de boisson selon l'une quelconque des revendications précédentes, dans lequel le réservoir d'eau (51) comporte une partie inclinée (514) configurée pour relier une circonférence extérieure du réservoir d'eau (51) à la nervure inférieure (513) et ayant un diamètre qui diminue vers le bas, et
la nervure de guidage (602) est dirigée vers la partie inclinée (514), lorsque le réservoir d'eau (51) est inséré dans le boîtier de réservoir d'eau (149).

6. Dispositif de préparation de boisson selon l'une quelconque des revendications précédentes, dans lequel le réservoir d'eau (51) comporte :
une partie courbe arrondie (511) configurée pour définir une partie d'une circonférence extérieure du réservoir d'eau (51) ; et
une partie plate (512) configurée pour définir l'autre partie de la circonférence extérieure du réservoir d'eau (51),
dans lequel le boîtier de réservoir d'eau (149) inclut un guide de montage (601) dirigé vers la partie plate (512) du réservoir d'eau (51) lorsque le réservoir d'eau (51) est inséré dans le boîtier de réservoir d'eau (149).

7. Dispositif de préparation de boisson selon l'une quelconque des revendications précédentes, comportant en outre un couvercle de réservoir d'eau (530) configuré pour ouvrir et fermer le réservoir d'eau (51) sur un côté supérieur du réservoir d'eau (51), dans lequel le réservoir d'eau (51) comporte au moins un élément parmi :
un corps principal (510) ayant une surface supérieure ouverte ;
un corps d'appui de couvercle (520) sur une extrémité supérieure du corps principal (510) et qui est destiné à mettre le couvercle de réservoir d'eau (530) en appui ; et
une garniture (526) disposée entre le corps principal (510) et le corps d'appui de couvercle (520).

8. Dispositif de préparation de boisson selon la revendication 7, dans lequel le réservoir d'eau (51) comporte en outre une poignée (540) en liaison rotative avec le corps d'appui de couvercle (520) et disposée de manière à entourer une partie d'une circonférence extérieure du couvercle de réservoir d'eau (530).

9. Dispositif de préparation de boisson selon la revendication 7 ou 8, dans lequel le couvercle de réservoir d'eau (530) comporte une partie de liaison (532) qui est couplée par charnière au corps d'appui de couvercle (520), la partie de liaison (532) étant de préférence disposée à l'intérieur de la poignée (540).

10. Dispositif de préparation de boisson selon la revendication 9, dans lequel un espace espacé (541) est défini entre la partie de liaison (532) et la poignée (540).

11. Dispositif de préparation de boisson selon l'une quelconque des revendications 7 à 10, dans lequel le corps d'appui de couvercle (520) est muni :
d'une première nervure supérieure (523) faisant saillie vers le bas à partir du corps d'appui de couvercle (520) ; et
d'une seconde nervure supérieure (524) espacée radialement vers l'extérieur de la première nervure supérieure (523),
dans lequel la garniture (526) est insérée entre la première nervure supérieure (523) et la seconde nervure supérieure (524).

12. Dispositif de préparation de boisson selon l'une quelconque des revendications 7 à 11, dans lequel le corps principal (510) comporte au moins un élément parmi :
une première nervure inférieure (510A) en contact avec une extrémité inférieure de la première nervure supérieure (523) ; et
une seconde nervure inférieure (510B) espacée radialement vers l'extérieur de la première nervure inférieure (510A).

13. Dispositif de préparation de boisson selon la revendication 12, dans lequel le corps d'appui de couvercle (520) est pourvu d'une partie de fusion (527) faisant saillie vers le bas à partir d'une extrémité intérieure de la seconde nervure supérieure (524) et fusionnée avec la seconde nervure inférieure (510B).

14. Dispositif de préparation de boisson selon la revendication 13, dans lequel une saillie supérieure (525) fait saillie vers le bas à partir de la seconde nervure supérieure (524),
une saillie inférieure (510C) fait saillie vers le haut à partir de la seconde nervure inférieure (510B) pour être en contact avec la saillie supérieure (525), et
la saillie supérieure (525) et la saillie inférieure (510C) recouvrent la partie de fusion (527) à l'extérieur.
